Europäisches Patentamt

European Patent Office

Office européen des brevets

(19)

(11) Veröffentlichungsnummer: **0 268 015 B1**

(12) **EUROPÄISCHE PATENTSCHRIFT**

(45) Veröffentlichungstag der Patentschrift: **01.07.92**

(21) Anmeldenummer: **87110038.4**

(22) Anmeldetag: **11.07.87**

(51) Int. Cl.⁵: **F04D 13/02**, F04D 13/06, F04D 29/58, H02K 49/10, H02K 5/128

(54) **Pumpe mit Spaltrohrmotor- oder Spaltrohrmagnetkupplungsantrieb.**

(30) Priorität: **20.11.86 DE 3639719**
**20.11.86 DE 3639720**
**04.06.87 EP 87108088**

(43) Veröffentlichungstag der Anmeldung:
**25.05.88 Patentblatt 88/21**

(45) Bekanntmachung des Hinweises auf die Patenterteilung:
**01.07.92 Patentblatt 92/27**

(84) Benannte Vertragsstaaten:
**AT BE CH DE ES FR GB GR IT LI LU NL SE**

(56) Entgegenhaltungen:
**DE-A- 3 337 086**
**FR-A- 2 293 823**
**GB-A- 821 609**
**GB-A- 963 993**

**WORLD PUMPS, Nr. 4, April 1982, Seiten 175-178; East Molesey, Surrey, GB. M. KNORR et al.:"Permanent magnet drives for pumps and agitators.**

**SOVIET INVENTIONS ILLUSTRATED, Sektion**

**O, Woche C/19, 18 Juni 1980, Ref. Nr. 34022; Derwent Publ. Ltd. London GB**

(73) Patentinhaber: **Hermetic-Pumpen GmbH**
**Gewerbestrasse 53**
**W-7803 Gundelfingen(DE)**

(72) Erfinder: **Krämer, Roland, Dr.**
**Reinhold-Schneider-Strasse 6**
**W-7803 Gundelfingen(DE)**
Erfinder: **Neumaier, Robert**
**Am Ohrensbächle 28**
**W-7804 Glottertal(DE)**

(74) Vertreter: **Patentanwälte Dipl.-Ing. Hans Schmitt Dipl.-Ing. Wolfgang Maucher**
**Dreikönigstrasse 13**
**W-7800 Freiburg i.Br.(DE)**

EP 0 268 015 B1

**Beschreibung**

Die Erfindung betrifft eine Pumpe gemäß dem Oberbegriff von Anspruch 1.

Pumpen mit Spaltrohrmotor- oder Spaltrohrmagnetkupplungsantrieb sind z. B. durch DE-GM 82 08 046 bekannt. Mit Hilfe ihres Spaltrohres wird bei diesen Pumpen ihr äußerer Antriebsteil hermetisch gegenüber dem Fördermedium enthaltenden inneren Pumpenbereich abgedichtet. Deshalb eignen sich solche Pumpen insbesondere zum Fördern von aggressiven oder anderwertig gefährlichen Medien, die sicher gegenüber der Umgebung oder dem Antriebsbereich der Pumpe abgeschirmt werden müssen. Derartige Pumpen haben sich in der Praxis in vieler Hinsicht bewährt, u. a. auch, weil die mit einer Stopfbuchse, Gleitringdichtung od. dgl. dynamischer Wellendichtung stets verbundene Leckage und Wartung entfällt. Dennoch haben Pumpen der eingangs erwähnten Art beim Einsatz für bestimmte Fördermedien noch erhebliche Nachteile. Dies gilt beispielsweise, wenn als Fördermedium eine Schmelze oder ein sehr zähflüssiges Medium vorgesehen ist. So kann z. B. beim Stillstand der Pumpe Schmelze über eine gewisse Zeit zum Erstarren kommen, und es besteht dann die Gefahr, daß beim Anfahren der Pumpe die vom Fördermedium umgebenen inneren Drehteile der Pumpe überlastet oder zerstört werden oder daß es überhaupt nicht möglich ist, ohne aufwendige zusätzliche Maßnahmen die Pumpe zum Anfahren zu bringen. Analoges gilt bei Fördermedien, die bei normaler Umgebungstemperatur so zähflüssig werden, daß das Anfahren der Pumpe sehr behindert oder gar unmöglich ist. Letzteres gilt insbesondere bei Pumpen mit Spaltrohrmagnetkupplungsantrieb, wo es geschehen kann, daß das äußere Antriebsteil das innere Drehteil der Pumpe gar nicht mehr mitnimmt und die Magnetkupplung "durchdreht". Wegen des zwischen dem äußeren Antriebsteil und dem Spaltrohrtopf bestehenden kontaktlosen Zwischenraumes ist eine Beheizung insbesondere bei innerhalb des Spaltrohres liegenden inneren Drehteilen, namentlich der dort liegenden Lager, praktisch nicht recht möglich.

Pumpen der oben erwähnten Art haben andererseits auch den Nachteil, daß zumindest ein vom Förderstrom abgezweigter, durch das Spaltrohr zur Schmierung der Gleitlager und gegebenenfalls zur Wärmeabfuhr dienender Teilstrom insbesondere durch das Abführen der Verlustwärme der magnetischen Kupplung und der Lagerwärme aufgewärmt wird und dann beim Rückführen in den Hauptförderstrom diesen z. B. mit aufwärmt. Deshalb sind solche Pumpen auch zum Fördern von wärmeempfindlichen Medien in bestimmten Bereichen nicht besonders geeignet.

Es besteht dabei noch zusätzlich die Problematik, daß bei solchen Pumpen das Spaltrohr ein im Betrieb empfindliches Teil ist. Auch bei guten Ausführungen solcher Pumpen sind in der Praxis Havariefälle nicht völlig vermeidbar. Typische Havariefälle sind z. B. Beschädigungen an Lagern des inneren Drehteiles, Korrosionserscheinungen im Bereich des Spaltrohres durch die Förderung chemisch aggressiver Flüssigkeiten, Verunreinigung des Fördermediums, z. B. durch Feststoffartikel oder Abrasion, wobei das Spaltrohr auf die Dauer durchgeschlissen wird. Bezüglich der Abrasion stellen besonders ferrithaltige Teilchen eine Gefahrenquelle dar, denn diese werden von den synchron laufenden Magneten angezogen und mitgenommen, so daß der vorbeschriebene Effekt begünstigt wird.

Eine andere Gefahrenquelle besteht darin, daß sich keramische Werkstoffe zwar in vieler Hinsicht als vorteilhaftes Lagermaterial erwiesen haben, solche keramischen Werkstoffe jedoch empfindlich gegen Stoßbelastung und Temperaturschock sind. Daraus ergibt sich die Gefahr, daß abgebrochene Lagerteile, in Rotation versetzt, die Spalttopfwand beschädigen.

Bekannt ist bei Pumpen mit Spaltrohrmotor- oder Spaltrohrmagnetkupplungsantrieb auch die Gefahr des unbeabsichtigten Trockenlaufes der innenliegenden Lager solcher Pumpen mit der Folge, daß das innere Drehteil mit dem Spaltrohr in Berührung kommt und dieses dann undicht wird.

Aus der FR-A-2 293 823 kennt man bereits eine magnetische Antriebsvorrichtung für die berührungslose Übertragung eines Drehmomentes, die ein äußeres Antriebsteil und ein inneres Drehteil hat, welches vom Antriebsteil mittels einer vergleichsweise dicken Trennwand hermetisch getrennt ist. In dieser Trennwand sind in axialer Richtung verlaufende Bohrungen vorgesehen, die deren Gesamtquerschnitt verringern, und dadurch der Bildung von Wirbelströmen entgegenwirken sollen. Diese Bohrungen in der einstückigen Trennwand können gleichzeitig dazu benutzt werden, ein Kühl- oder Heizmedium durchfließen zu lassen. Die an den im Gehäuseinneren herrschenden hohen Überdruck angepaßte Dicke der Trennwand erlaubt die Unterbringung derartiger Bohrungen, jedoch sind vergleichbare Bohrungen oder Längsdurchbrechungen bei den oft nur einen oder wenige Milimeter dicken Spaltrohrtöpfen kaum diskutabel.

Auch wurde bereits eine Kreiselpumpe mit einem Spaltrohrmagnetkupplungsantrieb der eingangs erwähnten Art vorbeschrieben, bei der ein vom Hauptförderstrom der Pumpe abgezweigter Teilstrom in das Spaltrohr-Innere eingeleitet und über eine, im Laufrad vorgesehene Bohrung wieder in den Hauptförderstrom zurückgeleitet wird (vgl. Sonderdruck aus "Industrieanzeiger", Nr. 63 vom 5.8.1981, S. 3, Abb. 7).

Nachteilig bei dieser vorbekannten Pumpe ist jedoch, daß das für die Erwärmung im Heizmantel vorgesehene Medium gerade in dem Bereich praktisch nicht zur Wirkung kommt, in dem das drehbare Antriebsteil mit dem inneren Drehteil magnetisch gekoppelt ist, sowie im Bereich des Spaltrohrtopfbodens und des dort angeordneten pumpenfernen Lagers. Somit kann man beispielsweise durch Beheizen des Heizmantels zwar im Pumpengehäuse eine für den Betrieb geeignete Temperatur und Viskosität des Fördermediums erzielen; es ist jedoch nur schwer möglich, die vom abgezweigten Teilstrom zur Kühlung und Lagerschmierung durch den Spaltrohrtopf geführte, abgezweigte Flüssigkeit ebenso auf die erforderliche Temperatur zu erwärmen, zumal für eine solche Kühlung der Antriebs-Verlustwärme und der Lagerwärme nur die Temperaturdifferenz des vom Hauptförderstrom abgezweigten Teilstromes zur Verfügung steht.

Es besteht daher die Aufgabe den Einsatzbereich der eingangs erwähnten Pumpen unter weitgehender Vermeidung der vorerwähnten Nachteile bei guter Funktionstüchtigkeit sowohl zu hohen als auch zu niedrigeren Temperaturen des Fördermediums hin zu erweitern, wobei als Antrieb eine Spaltrohrmagnetkupplung als auch ein Spaltrohrmotor in Frage kommen, deren Spaltrohrtopf beziehungsweise Spaltrohr gegen Undichtwerden besser gesichert ist.

Die erfindungsgemäße Lösung dieser Aufgabe besteht in den kennzeichnenden Merkmalen von Anspruch 1.

Bei der erfindungsgemäßen Pumpe kann das Spaltrohr oder der Spaltrohrtopf selbst je nach Bedarf als aktives Element einer Heizung oder einer Kühlung arbeiten. Beispielsweise wird durch Zufuhr von Heizmittel in den Wandungsinnenraum des Spaltrohres oder Spaltrohrtopfes vor der Inbetriebnahme der dort befindliche innere Drehteil der Pumpe, insbesondere der Lagerbereich oder die Lagerbereiche, ausreichend vorgewärmt, um einen flüssigen Zustand von sonst erstarrten oder zumindest zähflüssigen Fördermedien zu erreichen. Das Anfahrmoment der Pumpe wird dadurch erheblich vermindert, die Lager können von der ersten Umdrehung an ausreichend geschmiert werden und das Antriebsaggregat wird auf diese Weise ganz wesentlich entlastet. Dies ist besonders bei Pumpen mit Spaltrohrmagnetkupplungsantrieb wichtig, weil diese bei zu großen Anfahrdrehmomenten der Gefahr ausgesetzt sind, "durchzurutschen", d. h., daß bei ihnen die magnetische Kupplungsverbindung "abreißt" und das äußere Antriebsteil rotiert, während das innere Drehteil festgehalten bleibt. Zum anderen erlaubt eine Pumpe der vorbeschriebenen Art, deren Spaltrohr oder Spaltrohrtopf erfindungsgemäß einen Wandungsinnenraum aufweist, der durch Einleiten eines Kühlmediums in diesen Wandungsinnenraum eine Aufheizung des Fördermediums und der benachbarten Pumpenteile, insbesondere durch die Abfuhr der wirbelstromerzeugten und gegebenenfalls der Lagerwärme zu verhindern bzw. auszugleichen. Man kann dann wärmeempfindliche Medien auf einfache Weise wärmeneutral fördern.

Es ist sogar ein Temperieren möglich, d. h. das Spaltrohr bzw. der Spaltrohrtopf wird in einem bestimmten Temperaturbereich gehalten. Wenn beispielsweise das Fördermedium wenigstens 100° C haben muß, um ausreichend flüssig zu sein, jedoch keine höhere Temperatur als 150° C verträgt, kann man beispielsweise durch ein Temperier-Medium von 125° C sowohl die Heizung als auch, wenn notwendig, die Kühlung im Bereich des Spaltrohres bzw. Spaltrohrtopfes bewirken. Man hält die dort herrschende Temperatur in einem gewissen Temperaturbereich . Dies gilt sowohl für Pumpen mit Spaltrohrmotor-als auch für Pumpen mit Spaltrohrmagnetkupplungsantrieb. Dabei ergibt sich als zusätzlicher Vorteil, daß wegen der Doppel- oder Mehrfachwandigkeit von mindestens einem Teil des Spaltrohres oder Spaltrohrtopfes noch eine zusätzliche Abdichtung im Falle eines Defektes zur Verfügung steht. Wird beispielsweise die innere Spaltrohrwand undicht, kann das Fördermedium nicht in die Atmosphäre, sondern lediglich in den gewöhnlich geschlossenen Heiz- oder Kühlkreislauf eindringen. Wird die äußere Spaltrohrwand zerstört, kann lediglich das Heiz- oder Kühlkreismittel, nicht aber das in zahlreichen Fällen gefährlichere Fördermedium nach außen treten.

Um die Wandung des Spaltrohres bzw. Spaltrohrtopfes nicht zu dick und damit die Übertragungsverluste zu groß werden zu lassen, ist es zweckmäßig, wenn der Abstand der Spaltrohrwände 0,1 - 3 mm beträgt. Versuche haben überraschenderweise gezeigt, daß zum ausreichenden Heizen oder Kühlen bereits ein sehr schmaler Abstand der Spaltrohrwände ausreicht. Demnach kann nach einer besonders vorteilhaften Ausgestaltung der lichte Abstand der benachbarten Spaltrohrwände vorzugsweise 0, 1 - 0,5 mm betragen. Wenn man dann z. B. Dampf oder Thermalöl durch den Wandungsinnenraum des Spaltrohres oder Spaltrohrtopfes hindurchführt, erreicht man einerseits eine ausreichende Aufheizung bzw. erforderlichenfalls eine entsprechenden Temperierung oder Kühlung, andererseits braucht die Dicke des gesamten Spaltrohres bzw. der entsprechende Bereich eines Spaltrohrtopfes kaum dicker zu sein als bei vorbekannten, einwandigen Spaltrohren und Spaltrohrtöpfen, so daß entsprechend geringfügig größere Übertragungsverlsute gut in Kauf genommen werden können.

Vorteilhafterweise sind die Spaltrohrwände zur Drehachse konzentrisch angeordnet und pumpenseitig mit einem sie umschließenden und von der Drehachse weggerichteten Verbindungsflansch mechanisch fest und dicht verbunden Dies kann beispielsweise mittels einer Schweißverbindung erfolgen und der Verbindungsflansch kann dabei zu einer sicheren, stabilen, pumpenseitigen Lagerung des Spaltrohres bzw. Spaltrohrtopfes beitragen.

Vorzugsweise ist im Verbindungsflansch des Spaltrohres bzw. Spaltrohrtopfes mindestens je ein Zuleitungs- und ein Ableitungskanal für das Kühl- oder Heizmedium vorgesehen. Dadurch ist ein einfaches Ein- und Ausfließen dieses Kühl- oder Heizmediums in bzw. aus dem Wandungsinnenraum des Spaltrohres bzw. Spaltrohrtopfes ermöglicht. Um dabei das Heiz- oder Kühlmedium auch möglichst nahe an den Bereich der pumpenfernen Lagerung des inneren Drehteiles heranzuführen bzw. eine möglichst gleichmäßige Heiz- bzw. Kühlwirkung zu erreichen, ist es vorteilhaft, wenn innerhalb des Wandungszwischenraumes Strömungsführungsstege angeordnet sind, welche den Heiz- oder Kühlmittelstrom nahe dem pumpenfernen Ende des Spaltrohres, beispielsweise nahe dem Topfboden eines Spaltrohrtopfes vorbeileiten; dabei sind die Strömungsführungskanäle zweckmäßigerweise axial angeordnet. Auf diese Weise wird eine ungleichmäßige Aufheizung des Spaltrohres und damit einzelner Bereiche des inneren Drehteiles verhindert oder wenigstens weitgehend vermieden. Thermisch bedingte Spannungen aufgrund der Aufheizung oder Abkühlung werden somit klein gehalten. Hat die Pumpe einen Spaltrohrmagnetkupplungsantrieb und somit einen Spaltrohrtopf, kann die Gleichmäßigkeit der Aufheizung oder Kühlung des pumpenfernen Lagerbereiches noch dadurch weiter verbessert werden, daß der Topfboden des Spaltrohrtopfes Kanäle zur Durchleitung des Heiz- oder Kühlmediums enthält. Gegebenenfalls kann der Topfboden aus den vorerwähnten Gesichtspunkten heraus auch doppelwandig ausgeführt und der von dem Topfbodeninnenwänden umschlossene Topfbodeninnenraum zum Durchströmen eines Heiz- oder Kühlmediums vorgesehen sein. Dadurch wird verhältnismäßig viel Heiz-bzw. Kühlmedium praktisch bis an den dem pumpenfernen inneren Drehteil zugeordneten Lagerbereich herangeführt.

In besonderen Fällen kann es darauf ankommen, daß auch bei Zerstörung der Innenwand des Spaltrohres das zu fördernde Medium nicht verunreinigt wird, z. B. wenn das Fördermedium nicht mit einem Fremdmedium beaufschlagt werden darf, wo aber das Fördermedium bei Normaltemperatur weder zur Schmelze erstarrt noch so zähflüssig wird, daß es nicht gut umgewälzt werden kann. In diesem Falle kann man das dann normalerweise als Kühl-, allenfalls als Temperiermedium dienende Medium genau entsprechend dem eigentlichen Fördermedium auswählen und z. B. durch einen Kühler eines Sekundärkreislaufes fließen lassen. Kommt es dann zur Zerstörung der Innenwandung des Spaltrohres oder des Spaltrohrtopfes, wird dennoch das eigentliche Fördermedium nicht verunreinigt und die Pumpe bleibt wegen der unbeschädigten Außenwand hermetisch dicht verschlossen. Analoges gilt auch, wenn das Fördermedium eine Mischung mit einem hinreichend neutralen Sekundärkreis-Medium verträgt und man ein solches Fördermedium-neutrales Medium von entsprechender Viskosität als Heiz- oder Kühlmedium durch den Wandungsinnenraum fördert.

Zusätzliche Ausgestaltungen der Erfindung sind in weiteren Unteransprüchen ausgeführt.

Nachstehend wird die Erfindung in Verbindung mit vorteilhaften Ausführungsbeispielen anhand der Zeichnung noch näher erläutert und beschrieben. Es zeigen in unterschiedlichen Maßstäben :

Fig. 1 eine nicht erfindungsgemäße Spaltrohrmagnetpumpe in teilweise geschnitten dargestellter Teil-Seitenansicht, sowie von erfindungsgemäßen Pumpen

Fig. 2 einen Teil-Längsschnitt im Bereich des Spaltrohrtopfes einer Spaltrohrmagnetpumpe ähnlich der Darstellung nach Fig. 1,

Fig. 3 einen schematisch dargestellten Längsschnitt durch einen gegeüber Fig. 2 etwas abgewandelten Spaltrohrtopf,

Fig. 4 eine Stirnansicht des Spaltrohrtopfes nach Fig. 3 bei weggelassenem Verbindungsflansch,

Fig. 5 einen stärker schematisierten Längsschnitt durch einen Spaltrohrtopf ähnlich dem nach Fig. 3, jedoch mit doppeltem Topfboden,

Fig. 6 in stark vergrößertem Maßstab einen Ausschnitt des Längsschnittes entsprechend der rechten oberen Ecke beim Spaltrohrtopf nach Fig. 5,

Fig. 7 eine stark schematisierte, teilweise im Schnitt gehaltene Seitenansicht eines abgewandelten Spaltrohrtopfes mit elektrischer Heizung,

Fig. 8 eine Teilaufsicht auf einen Strömungsführungssteg entsprechend der Blickrichtung A in Fig. 3 mit Teilen der Umgebung dieses Strömungsführungssteges,

Fig. 9 eine Flüssigkeitsring-Gaspumpe in stark verkleinertem Maßstab, die mit einem doppelwandigen Spaltrohrmagnetkupplungsantrieb ausgerüstet ist,

Fig. 10 den motorseitigen Teil einer teilweise im Schnitt dargestellten Spaltrohrmotorpumpe,

Fig. 11 den motorseitigen Teil einer teilweise im Schnitt dargestellten Spaltrohrmotorpumpe, die gegenüber der nach Fig. 10 im Sinne einer ausbaubaren inneren Rohrwand des Sapltrohres abgewandelt ist,

Fig. 12 eine vergrößerte, im Schnitt gehaltene Teilansicht des Ausschnittes A in Fig. 11,

Fig. 13 einen vergrößerten Teil-Längsschnitt des Ausschnittes B nach Fig. 11,

Fig. 14 einen stark schematisierten Längsschnitt durch das innere Spaltrohr des motorseitigen Teiles der Spaltrohrmotorpumpe nach Fig. 11,

Fig. 15 einen stark schematisierten Längsschnitt durch das äußere Spaltrohr des motorseitigen Teiles der Spaltrohrmotorpumpe nach Fig. 11,

Fig. 16 eine teilweise im Schnitt gehaltene Teil-Seitenansicht einer abgewandelten Spaltrohrmotorpumpe,

Fig. 17 einen vergrößerten Teil-Längsschnitt entsprechend dem Ausschnitt E aus Fig. 16,

Fig. 18 einen vergrößerten Teil-Längsschnitt entsprechend dem Ausschnitt F aus Fig. 16,

Fig. 19 einen vergrößerten Teil-Querschnitt entsprechend dem Ausschnitt G aus Fig. 16,

Fig. 20 eine teilweise im Schnitt gehaltene Teil-Seitenansicht einer gegenüber Fig. 2 abgewandelten Spaltrohrmagnetkupplungspumpe,

Fig. 21 einen vergrößerten Querschnitt des Ausschnittes D aus Fig. 20 und

Fig. 22 einen Teil-Längsschnitt eines doppelwandigen Spaltrohrtopfes mit zugehörigem Verbindungsflansch in gegenüber der Ausführung nach Fig. 20 etwas abgewandelter Ausführung.

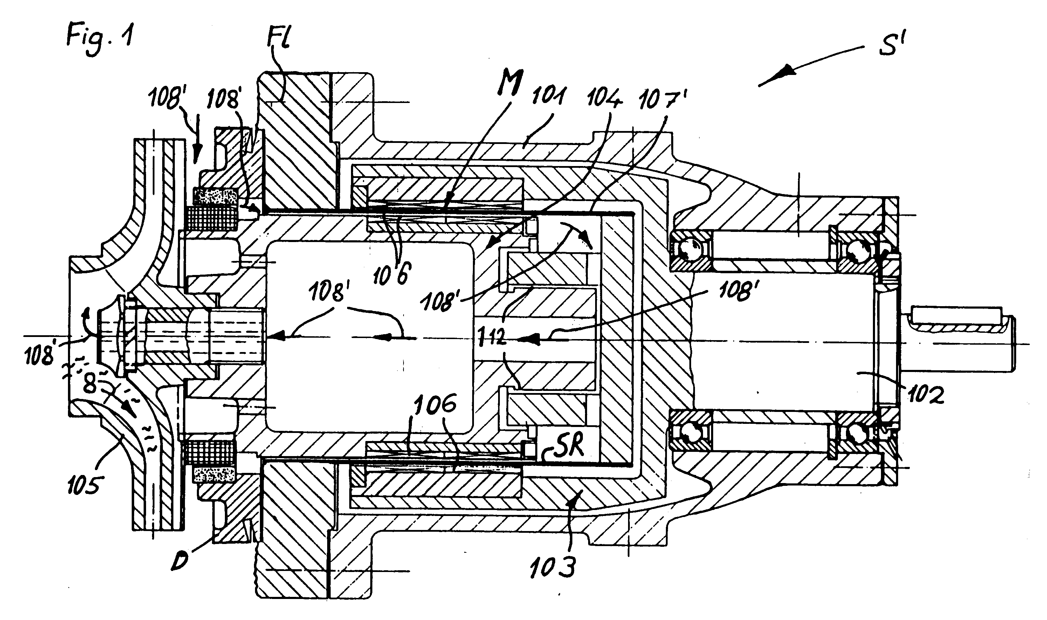

Fig. 1 zeigt ein Ausführungsbeispiel einer bekannten, nicht erfindungsgemäßen Pumpe mit Spaltrohrmagnetkupplungsantrieb S'. Pumpen mit Spaltrohrmagnetkupplungsantrieb werden hier auch kurz "Spaltrohrmagnetpumpen" genannt. In Fig. 1 ist deren Grundaufbau gut erkennbar und die Bezugszeichen gehören dort zur Serie 101, 102 usw. So befinden sich in einem Lagergehäuse-Anschluß 101 eine Antriebswelle 102, ein mit ihr verbundenes äußeres Antriebsteil 103 einer Magnetkupplung M, welches deren inneres Drehteil 104 topfartig konzentrisch umschließt. Dieses ist mit einem Pumpenrad 105 verbunden. Antriebsteil 103 und inneres Drehteil 104 sind über Magnete 106 magnetisch gekuppelt. Eine Drehbewegung des Antriebsteiles 103 wird über die Magnetkräfte auf das innere Drehteil 104 übertragen, welches das Pumpenrad 105 antreibt. Zwischen dem inneren Drehteil 104 und dem äußeren Antriebsteil 103 befindet sich ein Spaltrohrtopf 107', der pumpenseitig an einem flanschartigen Teil Fl des im Detail nicht näher dargestellten Pumpengehäuses, von dem nur der Pumpengehäuse-Deckel D in Fig. 1 erkennbar ist. Der Spaltrohrtopf 107' bildet einen hermetischen Abschluß des vom Fördermedium durchflossenen Pumpeninnenraumes gegenüber den äußeren Teilen 102, 103 des Pumpenantriebes. Häufig durchfließt ein abgezweigter Teilstrom 108' des Fördermediums 8 den inneren Teil des Spaltrohrtopfes 107, z. B. in Richtung der Pfeile 108'. Mit 112 ist ein pumpenfernes Gleitlager des inneren Drehteiles 104 bezeichnet. Das Spaltrohr SR des Spalttopfes 107' besteht aus einem einzigen Rohr.

Bekannte Pumpen mit Spaltrohrmotorantrieb, nachstehend kurz "Spaltrohrmotorpumpen" genannt, haben in aller Regel ebenfalls ein einwandiges Spaltrohr (vgl. z. B. Position 13 in DE-OS 27 54 840).

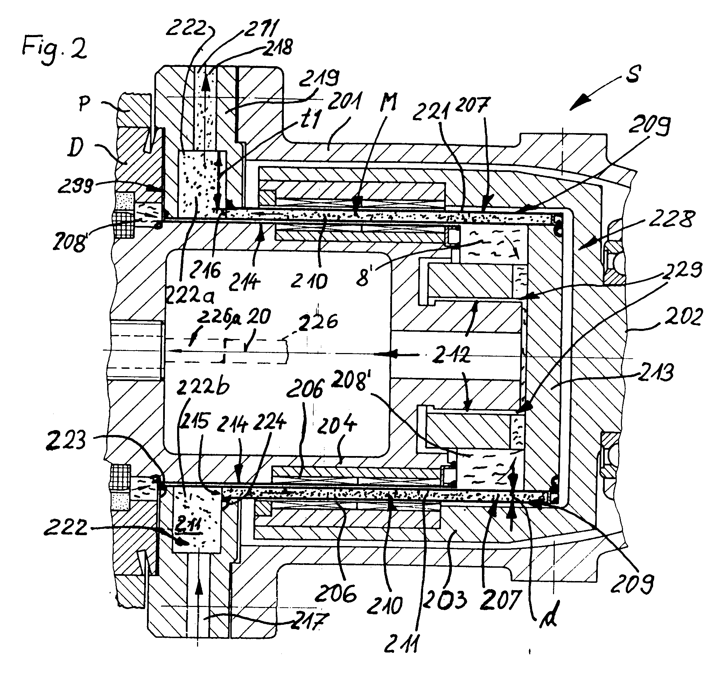

Fig. 2 zeigt nun in einem begrenzten Ausschnitt gegenüber Fig. 1 ein Ausführungsbeispiel einer Spaltrohrmagnetpumpe S die teilweise die Merkmale der Erfindung enthält. Bei ihr sind die Bezugszeichen der 200ter-Serie, nämlich 201, 202 usw. verwendet. Dabei ist dort der rohrartige Teil 209 des Spaltrohrtopfes 207 erfindungsgemäß doppelwandig ausgebildet, wobei der durch diese Doppelwandigkeit gebildete Wandungsinnenraum 210 zur Aufnahme eines Heiz-oder Kühlmediums 211 vorgesehen ist. Durch Einlassen eines Heiz- bzw. Kühlmediums können die dortigen Gleitlager 212, insbesondere über den als Wärmebrücke dienenden Topfboden 213 aufgeheizt oder abgekühlt werden. Ebenso wird das z. B. im Gleitlager 212 als Gleitmittel wirkende, in Fig. 2 mit gewellten Strichen angedeutete Fördermedium 8', welches sich innerhalb des Spaltrohrtopfes 207 in unmittelbarem Kontakt zu der Spaltrohrinnenwand 214 befindet, bei der Einführung eines Heizmediums in den Wandungsinnenraum 210 aufgeheizt und damit verflüssigt oder in der Viskosität erniedrigt. Auf diese Weise können Lagerschäden durch ungenügende Schmierung sowie Analufprobleme der Spaltrohrmagnetpumpe S praktisch verhindert werden. Die hierdurch erzielte Erniedrigung der Viskosität führt in manchen Fällen auch bei laufendem Betrieb zu einer geringeren Reibung der Gleitlagerflächen und damit zu einer Verringerung der Lauf-Reibungsverluste; u. U. können die durch die dikkere, weil doppelwandigere Spaltrohrwandung verursachten Kraftübertragungsverluste zwischen Antriebsteil 203 und innerem Drehteil 204 wenigstens teilweise kompensiert werden, so daß sich der Wirkungsgrad der erfindungsgemäßen Spaltrohrpumpe S nicht wesentlich zu verschlechtern braucht, unter bestimmten Umständen sogar verbessern kann.

Beim Durchführen eines Kühlmediums durch den Wandungsinnenraum 210 des Spaltrohrtopfes 207 kann bei wärmeempfindlichen Fördermedien eine weitere Aufheizung vermieden oder auch eine Kühlung des Fördermediums erreicht werden. Insbesondere kann die durch Wirbelströme erzeugte Erwärmung des Spaltrohrtopfes 207 mindestens weitgehend innerhalb dieses Spaltrohrtopfes 207 selbst durch ein Kühlmittel abgeführt werden.

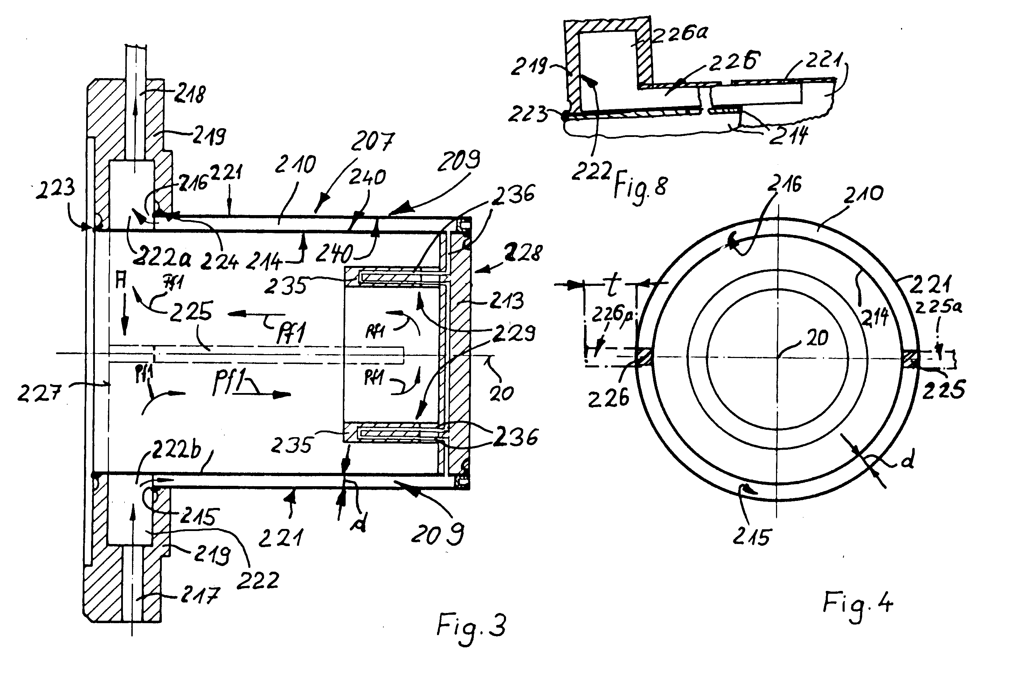

Das Heiz- oder Kühlmittel 211 wird durch einen Eintritt 215 in den Wandungsinnenraum 210 geleitet und verläßt nach dessen Durchströmung den Spaltrohrtopf 207 über einen Austritt 216. Dieser Eintritt 215 und dieser Austritt 216 gehen jeweils in einen Zuleitungs- 217 und einen Ableitungskanal 218 über, die sich in einem Verbindungsflansch 219 befinden. Dieser stellt die Verbindung zwischen dem Pumpengehäusedeckel D oder dem Pumpengehäuse P sowie dem Lagergehäuse-Anschluß 201 her. Die zur Drehachse 20 der Spaltrohrmagnetpumpe S nach Fig. 2 konzentrisch angeordneten Rohrwände 214 u. 221 sind pumpenseitig vom Verbindungsflansch 219 umschlossen, jeweils fest und dicht mit ihm verbunden und dieser Verbindungsflansch 219 verbindet dann den gesamten Spaltrohrtopf 207 fest mit dem Pumpengehäuse P. Innerhalb des Verbindungsflansches 219 verläuft je ein Halbringkanal 222 a und 222 b. Jeder davon ist etwa über den halben Umfang des Spaltrohrtopfes 207 durch die Spaltrohrinnenwand 214 zur Drehachse 20 hin begrenzt. Die äußere Spaltrohrwand 221 ist mittels der Schweißverbindung 224 an der antriebsseitigen Wand des Ringkanals 222 a bzw. 222 b angebracht; die innere Spaltrohrwand 214 steht mit einer pumpenseitigen Stirnfläche 299 des Verbindungsflansches 219 mittels einer Schweißverbindung 223 in Verbindung. Strömungsführungsstege 225 und 226 (vgl. auch Fig. 3 u. 4) erstrecken sich axial etwa von den beiden Halbring-Kanälen 222 a und 222 b des Verbindungsflansches 219 bis in die Nähe des Topfbodens 213 des Spaltrohrtopfes 207 und sie unterteilen den Wandungsinnenraum 210 und den Ringkanal 222 in Umfangsrichtung jeweils in zwei etwa halbringförmige Abschnitte 222 a und 222b, wodurch die bereits erwähnten, etwa jeweils halbringförmigen Ein- und Austritte 215 und 216 gebildet sind (vgl. Fig. 2 - 4).

Damit das Heiz- oder Kühlmedium 211 den bodenseitigen Bereich des Spaltrohrtopfes 207 gut durchströmt, erstrecken sich die zwei axial orientierten Strömungsführungsstege 225, 226 vom pumpenseitigen Rand 227 des Spaltrohrtopfes 207 bis nahe an den Topfboden 213 und verhindern, daß das Kühl- oder Heizmittel auf möglichst kurzem Wege vom Eintritt 215 zum Austritt 216 strömt, ohne in den lagerseitigen Bereich des Topfboden 213 zu gelangen. Wie erwähnt, unterbrechen diese Führungsstege 225, 226 auch den im Verbindungsflansch 219 befindlichen, gewöhnlich aus herstellungstechnischen Gründen umlaufend hergestellten Ringkanal 222 und teilen ihn in die beiden erwähnten Halb-Ringkanäle 222 a und 222 b auf. Durch die Strömungsführungsstege 225, 226 wird somit eine im weentlichen den gesamten Wandungsinnenraum 210 des Spaltrohrtopfes 207 umschließende Strömung erreicht, wie sie mit Pfeilen Pf 1 in Fig. 3 dargestellt ist. Auf diese Weise wird eine verhältnismäßig gleichmäßige Erwärmung oder Abkühlung bzw. eine Temperierung in bestimmten Grenzen des im Spaltrohrtopf 207 befindlichen Fördermediums 8' erreicht. Mit 202 ist in Fig. 2 die Antriebswelle bezeichnet analog Pos. 102 in Fig. 1

In den Zeichnungsfiguren, insbesondere den Fig. 2 bis 4, ist der lichte Abstand d zwischen den Spaltrohrwänden 214 und 221 der besseren Übersicht wegen stark vergrößert dargestellt. Man kann den lichten Abstand d der einander zugewandten Innenwandflächen 240, also den lichten Abstand der beiden Spaltrohrwände 214 und 221, bedarfsweise zwischen 0,1 mm und 3 mm wählen. Wählt man den Abstand d etwa 2 mm, erhält man einen verhältnismäßig großen Durchtrittsquerschnitt für das Wärme- oder Kühlmedium. Die dadurch bedingte Dicke des rohrartigen Teiles 209 des Spaltrohrtopfes 207 bedingt jedoch eine Verschlechtertung der magnetischen Übertragungskräfte. Versuche haben überraschend gezeigt, daß man über Fördermedien wie Heißdampf oder Thermoöl bereits eine ausreichende Temperaturbeeinflussung des Spaltrohrtopfes 207 und seiner unmittelbaren Umgebung erhält, wenn man den lichten Abstand d zwischen den Spaltrohrwänden 214 u. 221 zwischen 0,1 mm und 0,5 mm wählt. Dies hat den Vorteil, daß es praktisch kaum zu einer in der Praxis ins Gewicht fallenden Verschlechterung der Kraftübertragungsverhältnisse zwischen Antriebsteil 203 und innerem Drehteil 204 kommt.

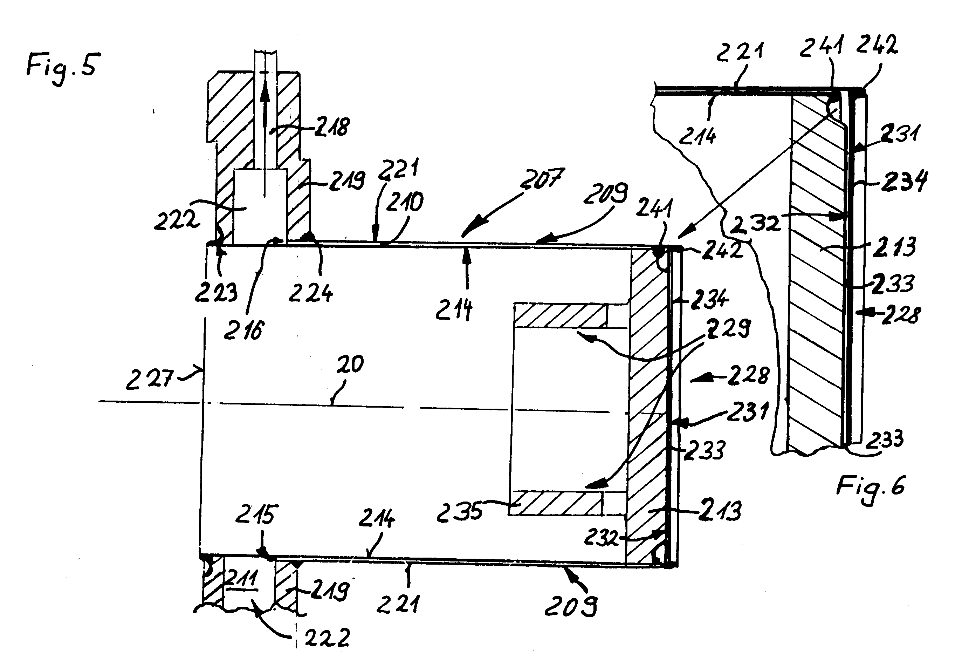

Im Ausführungsbeispiel nach Fig. 2 und 3 sind die Spaltrohrwände 214, 221 am pumpenfernen Ende 228 mit dem Topfboden 213 verschweißt. Im Ausführungsbeispiel nach Fig. 5 u. 6 ist erfindungsgemäß auch der Topfboden 213 doppelwandig ausgeführt, so daß das Heiz- oder Kühlmedium auch stirnseitig beim inneren Lagerbereich 229 durch den von dem Topfbodeninnenwänden 213 und 232 umschlossenen Topfbodeninnenraum 23 entlanggeführt wird. Die Wandungsstege 225, 226 (Fig. 3 u. 4) werden dann zweckmäßig axial entsprechend weit in Richtung des Topfbodens 213 ausgebildet. Dadurch, daß das Heiz- bzw. Kühlmedium durch den Topfbodeninnenraum 233 hindurchgeführt wird, ergibt sich eine besonders wirksame Heizung oder Kühlung insbesondere des gefährdeten Lagerbereiches 229 nahe dem Topfboden 213.

In Fig. 4 sind fahnenartige Abschnitte 225 a, 226 a strichpunktiert eingezeichnet, die im Bereich des Ringkanales 222 radial nach außen vorstehen (vgl. Fig. 3, 4 u. 8). Diese fahnenartigen Abschnitte 225 a, 226 a der Wandungsführungsstege 225, 226 haben eine radiale Erstreckung t, die der radialen Tiefe t 1 des Ringkanals 222 an seiner pumpenfernen Steite entspricht (Fig. 2). Auf diese Weise kann mit einfachen Mitteln auch der ursprünglich durchgehend aufgedrehte Ringkanal 222 des Flansches 219 in zwei etwa halbringförmige Abschnitte 222 a und b mit-unterteilt werden.

Zur Bildung eines Topfbodeninnenraumes 233 ist die Spaltrohrinnewand 214 am eigentlichen inneren Topfboden 213 über eine Schweißlippe 241 angeschweißt, während die Spaltrohraußenwand 221 ringförmig mit einem Abschlußdeckel 234 verschweißt ist, der parallel zum inneren Topfboden 213 diesen zur Antriebsseite hin abschließt. Die zugehörige Schweißnaht ist mit 242 bezeichnet (Fig. 5 u. 6). Dabei ist der Abschlußdeckel 234 biegesteif ausgeführt, um die an der Schweißnaht 242 beim Verbiegen wirkenden Hebelkräfte während Druckschwankungen möglichst klein zu halten.

Wie in Fig. 3 dargestellt, können der innere Topfboden 213 sowie die Lagerböcke 235 Kanäle 236 zur Durchleitung des Heiz- oder Kühlmediums enthalten und damit die Heiz-oder Kühlwirkung an den Gleitlagern 212 (vgl. Fig. 2) noch weiter zu verbessern.

Fig. 7 zeigt übrigens, stark schematisiert, eine weitere, nicht erfindungsgemäße, Möglichkeit zum Heizen des Spaltrohrraumes und insbesondere der zugehörigen Lager. Dies erfolgt mittels einer im ganzen mit 245 bezeichneten elektrischen Heizung. Zu diesem Zweck sind um den Spaltrohrtopf 207 Heizdrähte 246 gewickelt, die den rohrartigen Teil 209 des Spaltrohrtopfes 207 bei Stromdurchfluß aufheizen. Diese Heizdrähte 246 können dabei, gegebenenfalls im gleichmäßigen Abstand zueinander, durchgehend gewickelt oder auch parallel an einer Stromzuführung angeschlossen sein. Um sie vor Beschädigung zu schützen, können sich auch in einem Spaltrohrtopf 207 eingelassen oder in dem Wandungsinnenraum 210 eines mehrwandigen Spaltrohrtopfes 207 angebracht sein. Im Innenlagerbereich 229 sind die Heizdrähte 246 zum möglichst unmittelbaren Aufheizen der Lager 235 durch den Topfboden 213 entsprechend den dort in Fig. 7 gestrichelt eingezeichneten Linien 246′ geführt.

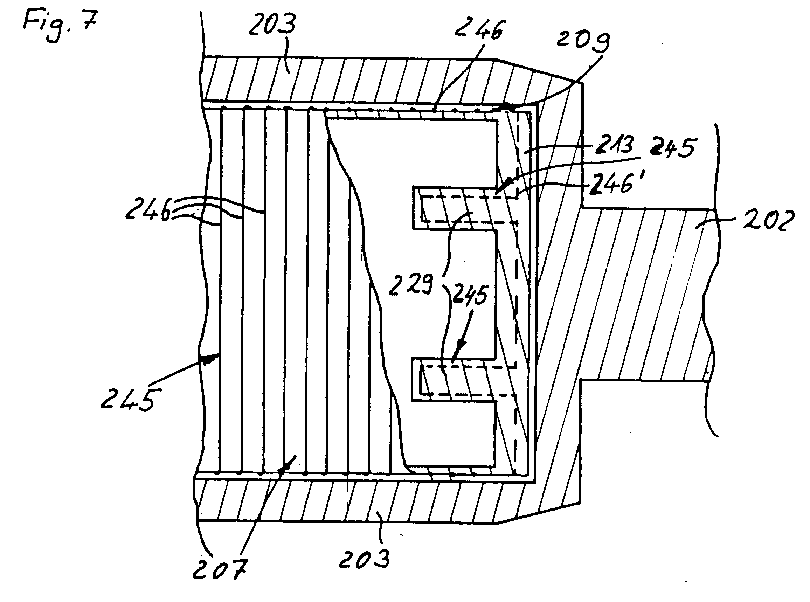

In den Fig. 2 bis 6 ist die Erfindung im wesentlichen an unterschiedlichen Beispielen von Spaltrohrmagnetkupplungspumpen erläutert worden.

Dort zeigt (vgl. Fig. 3 u. 5) Position 227 den pumpenseitigen Rand des Spaltrohrtopfes 207, speziell den seiner inneren Spaltrohrwand 214. In Fig. 5 zeigt Position 232 die topfbodenseitige Innenwand des im ganzen mit 213 bezeichneten Topfbodens, während man in der gleichen Figur bei 223 u. 224 Schweißverbindungen erkennt, mit denen die innere Spaltrohrwand 214 bzw. die äußere Spaltrohrwand 221 mit dem Verbindungsflansch 219 dicht verbunden sind.

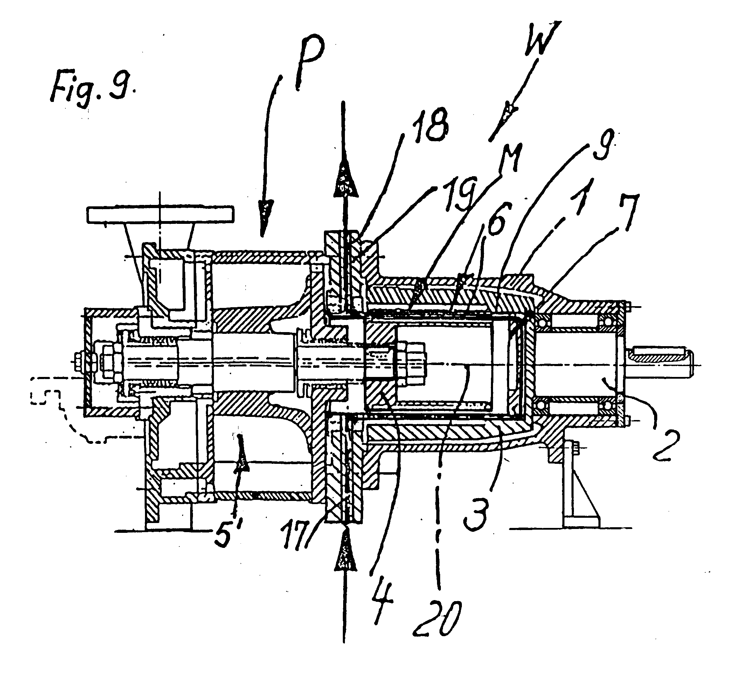

Spaltrohrmotorpumpen (SpM) oder Spaltrohrmagnetkupplungspumpen (S), bei denen wenigstens ein Teil des Spaltrohres oder des Spaltrohrtopfes erfindungsgemäß mindestens doppelwandig ausgebildet ist und bei denen der durch die Doppel- oder Mehrfachwandigkeit gebildete Wandungsinnenraum, z. B. 210, zur Aufnahme eines Heiz- oder Kühlmittels 211 vorgesehen ist, können nicht nur bei Kreiselpumpen, wie vorbeschrieben, sondern auch bei Verdrängerpumpen oder, wie im nachfolgenden Ausführungsbeispiel nach Fig. 9 beschrieben, bei Wasserringpumpen Verwendung finden. Dabei zeigt Fig. 9, stärker schematisiert und verkleinert, eine Wasserringpumpe W mit einem geschlossenen Pumpengehäuse P, in der sich ein Wasserringpumpen-Flügelrad 5′ befindet. Dessen Antrieb erfolgt dort wiederum über eine Magnetkupplung M, die antriebsseitig am Pumpengehäuse in der schon beschriebenen Weise dichtend angeflanscht ist. Das mit dem dortigen Laufrad 5′ in Verbindung stehende innere Drehteil 4 befindet sich in der üblichen Weise in einem Spaltrohrtopf 7. In einem Lagergehäuse-Anschluß 1 lagert die Antriebswelle 2, mit der ein äußeres Antriebsteil 3 der Magnetkupplung M verbunden ist. Pumpenlaufrad 5′, inneres Drehteil 4 einerseits und Antriebswelle 2 nebst daran befestigtem Antriebsteil 3 drehen sich um eine gemeinsame Drehachse 20. Mit 6 sind die jeweils am Antriebsteil 3 und am inneren Drehteil 4 befestigten Magnete bezeichnet, welche durch den rohrartigen Teil 9 des Spaltrohrtopfes 7 die Drehbewegung des Antriebsteiles 3 auf das innere Drehteil 4 übertragen.

Analog zum bereits beschriebenen Ausführungsbeispiel nach Fig. 2 ist bei der Wasserringpumpe W nach Fig. 9 ein Verbindungsflansch 19 vorgesehen, der einen Zuleitungskanal 17 sowie einen Ableitungskanal 18 entsprechend den analogen Kanälen 217 und 218 nach Fig. 2 aufweist. Diese stehen dann in der bereits in Verbindung mit Fig. 2 beschriebenen Weise mit dem entsprechenden Wandungsinnenraum des Spaltrohres 7 gemäß Fig. 9 in Verbindung und das Heiz- oder Kühlmittel wird bei der Ausführung nach Fig. 9 in der bereits in Verbindung mit Fig. 2 usw. beschriebenen Weise durch den Wandungsinnenraum des Spaltrohrtopfes 7 der Wasserringpumpe W geführt. Der Pumpenteil der Wasserringpumpe W könnte auch durch eine Spaltrohrmotorpumpe angetrieben sein, wie sie nachstehend, insbesondere bezüglich ihres spaltrohrmotorteiles noch näher beschrieben wird.

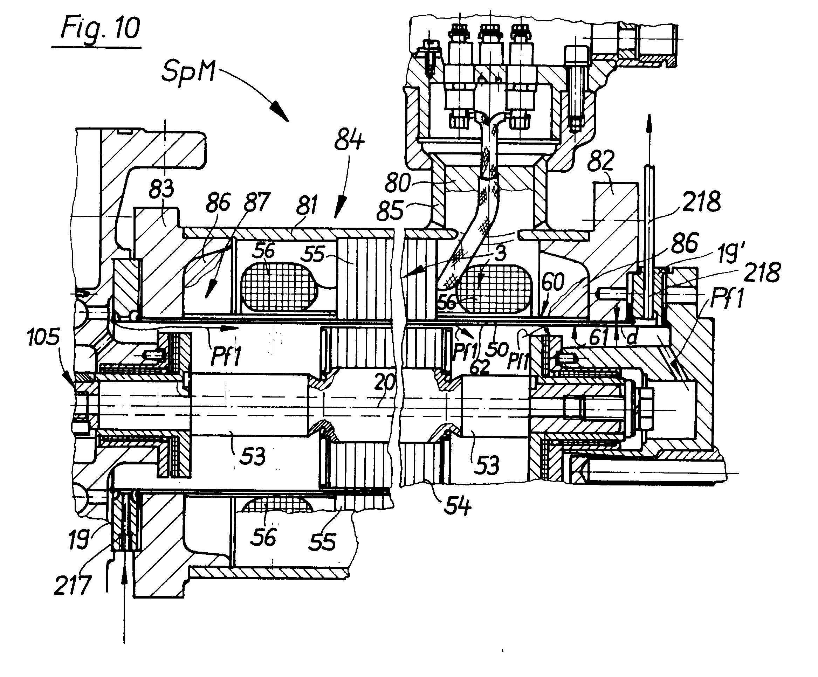

Fig. 10 zeigt im Teil-Längsschnitt den Motorbereich einer Spaltrohrmotorpumpe SpM. An die dortige Welle 53 kann sich links ein Kreiselpumpenlaufrad ähnlich den in Fig. 1 mit 105 bezeichneten Laufrad anschließen. Dabei ist erfindungsgemäß bei dieser Spaltrohrmotorpumpe SpM das dort mit 50 bezeichnete Spaltrohr wiederum doppelwandig ausgebildet.

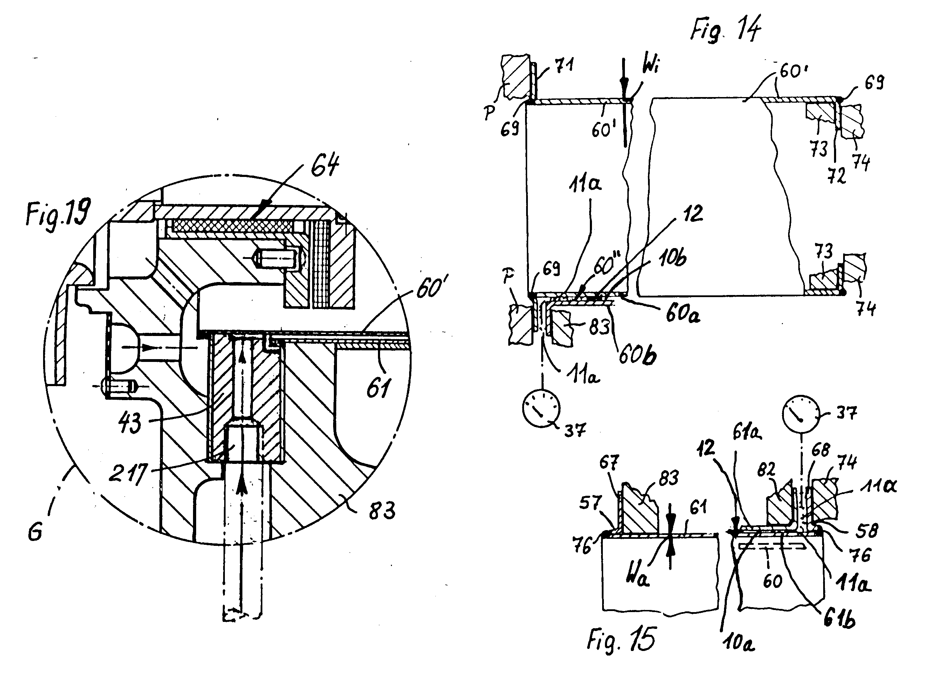

Dabei ist hier zwecks Absicherung des gesamten Pumpen-und Motorgehäuses gegen ein Auslaufen des Fördermediums bei Bechädigung des Spaltrohres eine im ganzen mit 84 bezeichnete, geschlossene Abkapselung im Motorbereich vorgesehen. Dazu gehören ein Mantelrohr 81, zwei sich stirnseitig daran anschließende Stirnflansche 82 und 83 sowie der elektrische Anschlußstutzen 85, die alle dicht miteinander verbunden sind. Ferner gehören zu dieser an sich bekannten Abkapselung des Außenantriebsbereiches die abschnittweise angedeuteten Kunststoff-Füllungen 80 des elektrischen Anschlußstutzens 85 sowie die abschnittweise angedeutete Kunststoff-Füllung 86 des Statorraumes 87. Durch eine solche Ausbildung konnte auch bei bisherigen Spaltrohrmotorpumpen bei einem Undichtwerden eines einwandigen Spaltrohres keine Förderflüssigkeit nach außen dringen, vorausgesetzt, alle Flanschdichtungen sowie die vorerwähnten Kunststoff-Füllungen 80, 86 usw. waren funktionstüchtig. Letzteres ist jedoch nach langen Betriebszeiten nicht immer gewährleistet. Deshalb kann, wie nachstehend noch näher erörtert wird, eine doppelwandige Ausführung gemäß Fig. 10 und gegebenenfalls eine Mehrfachwandung gemäß Fig. 14 neben der Kühlung oder Erwärmung auch noch gemäß der Weiterbildungen der Erfindung ein zusätzlicher Schutz gegen Austreten von gefährlichen Fördermedien, gegebenenfalls gegen Austreten von gefährlichen Kühl- oder Heizmedien erreicht werden. In Fig. 10 erkennt man, wie das doppelwandige Spaltrohr 50 eine Innenwand 61 und eine Außenwand 60 aufweist. Dieses Spaltrohr 50 steht pumpenseitig ähnlich wie der rohrartige Teil 209 des Spaltrohrtopfes 207 beim Ausführungsbeispiel nach Fig. 2 mit einem pumpenseitigen Verbindungsflansch 19 in Verbindung. Am pumpenfernen Ende ist ein weiterer Verbindungsflansch 19′ ähnlicher Bauweise vorgesehen. Im pumpennahen Verbindungsflansch 19 befindet sich wiederum der Zulaufkanal 217 für das Heiz- oder Kühlmedium und im pumpenfernen Verbindungsflansch 19′ der Ableitungskanal 218. Das Heiz- oder Kühlmedium kann dementsprechend gemäß den bei den Kanälen 217 bzw. 218 eingezeichneten Teilen den dortigen Wandungsinnenraum 62 im pumpennahen Bereich zugeführt werden und es verläßt diesen Wandungsinnenraum 62 über den zweiten Verbindungsflansch 218. Wegen der Anordnung von diesen beiden Verbindungsflanschen 217, 218 jeweils am pumpennahen und pumpenfernen Ende des Spaltrohres 50 sind bei dieser Ausführung keine Strömungsführungsstege vorgesehen; im Bedarfsfalle könnte man selbstverständlich den bereits beschriebenen Strömungsführungsstegen 225 und 226 entsprechende Strömungsführungsstege od. dgl. Strömungsführungen einbauen. In Fig. 10 erkennt man noch den auf der Antriebswelle 53 lagernde Motorrotor 54, den Motorstator 3 mit seinen Statorblechen 55 und Statorwicklungen 56 sowie stärker schematisiert an den Pfeilen Pf 1 die Fließrichtung eines an sich bekannten, vom Fördermedium abgezweigten Teilstromes.

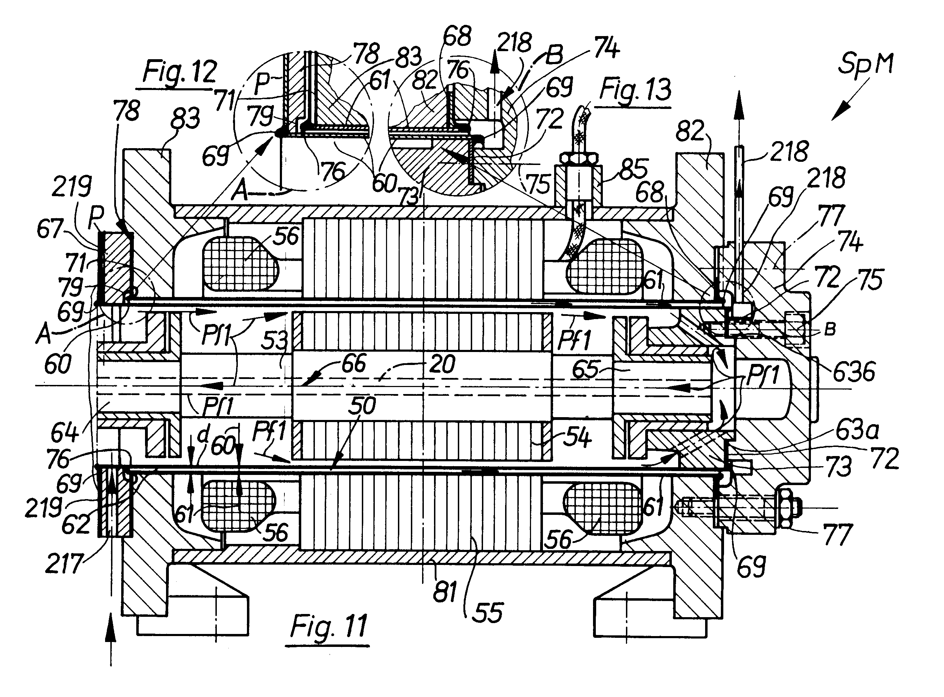

Bei den vorbeschriebenen Ausführungen gemäß Fig. 2 und Fig. 10 steht z. B. bei der Ausführung nach Fig. 2 der gesamte Spaltrohrtopf 207 mit seiner Innenwand 214 und seiner Außenwand 221 über die Schweißnähte 223 und 224 fest mit dem Verbindungsflansch 219 in Verbindung. Bei Beschädigung einer Wand 214 oder 221 des Spaltrohrtopfes 207 muß man in der Regel den gesamten Spaltrohrtopf 207 zusammen mit seinem Verbindungsflansch 219 ausbauen und vorzugsweise gegen einen neuen austauschen. Dies ist vom Reparaturaufwand nicht ganz befriedigend. Ähnlich liegen die Verhältnisse bei der Spaltrohrmotorpumpe SpM nach Fig. 10, wobei dort die Ausbauverhältnisse für Reparaturzwecke ebenfalls noch nicht ganz befriedigend sind. Weiterbildungen der Erfindung sind deshalb anhand der Fig. 11 - 15 erläutert. In Fig. 11 ist wiederum der Motorbereich einer Spaltrohrmotorpumpe SpM dargestellt, wobei in dieser Konstruktion nicht nur die noch zu erläuternden Schweißstellen an den stirnseitigen Enden des Spaltrohres 50 detailliert erläutert werden, sondern diese Konstruktion auch darauf abzielt, die innere Rohrwand 60′ des dortigen Spaltrohres 50 gut auswechselbar auszugestalten. Dazu besitzt diese innere Rohrwand 60′ an ihrer pumpennahen Seite einen sich radial nach außen erstreckenden Dichtflansch 71, während sie an ihrem pumpenfernen Ende einen sich radial nach innen erstreckenden Dichtflansch 72 hat (vgl. insbesondere Fig. 11 u. 14). In Fig. 11 erkennt man das pumpenseitige Lager 64 und das pumpenferne Lager 65 des Motorbereiches der Spaltrohrmotorpumpe SpM. Das pumpenferne Lager 65 ist dabei in bekannter Weise in einem pumpenfernen Lagerstuhl 73 gehalten, der seinerseits mit einem Zentrierstutzen 63 a in einer entsprechenden Zentrierbohrung 73 b eines pumpenfernen Abschlußdeckels 74 eingesteckt ist, wobei diese Teile 73, 74 über LagerstuhlVerbindungsschrauben 75 fest und dicht miteinander verbunden sind. Fig. 13, die einen vergrößerten Ausschnitt entsprechend dem strichpunktierten Kreis "B" wiedergibt, zeigt gut, wie der pumpenferne Dichtflansch 72 der inneren Rohrwand 60′ des Spaltrohres 50 zwischen dem pumpenfernen Lagerstuhl 73 und dem pumpenfernen Abschlußdeckel 74 eingeklemmt ist. Dabei steht der im wesentlichen radial orientierte pumpenferne Dichtflansch 72 über eine kreisringförmig verlaufende Schweißnaht 69 mit dem pumpenfernen Ende der inneren Rohrwand 60′ in Verbindung (vgl. insbesondere Fig. 13 u. 14). Der pumpenseitige Dichtflansch 71 ist ebenfalls im wesentlichen radial orientiert, kann jedoch, um genügend Platz für noch zu beschreibende weitere Schweißnähte 69, 76 zu schaffen, eine ringförmige, in Richung des (dort links angedeuteten Pumpenteiles) gerichtete Ausbuchtung 79 aufweisen (vgl. Fig. 12). Der pumpenseitige Dichtflansch 71 kann jedoch auch, wie gut aus Fig. 14 erkennbar, praktisch vollständig radial angeordnet sein und nur eine geringfügige Abwinkelung an seinem Innenrand aufweisen, wodurch einen Schweißlippe für die entsprechende pumpenseitige Schweißnaht 69 gebildet ist, welche pumpenseitig die dichte Verbindung zwischen pumpenseitigen Dichtflansch 71 einerseits und pumpenseitigen Ende der inneren Rohrwand 60′ herstellt. Der pumpenferne Abschlußdeckel 74 ist in der üblichen Weise im benachbarten Stirnflansch 82 zentriert und dort mittels Deckelschrauben 77 festgelegt. In Fig. 11 erkennt man links neben dem pumpenseitigen Dichtflansch 71 noch den an die Spaltrohrmotorpumpe SpM angepaßten Verbindungsflansch 219.

In der Ausführung gemäß Fig. 11 bis 13 sind nämlich, ähnlich wie bereits im Ausführungsbeispiel nach Fig. 10 beschrieben, je ein Zuleitungskanal 217 und ein Ableitungskanal 218 für das Heiz- oder Kühlmedium vorgesehen. Dabei ist der pumpenseitige Zuleitungskanal 217 gemäß Fig. 11 im dortigen Verbindungsflansch 219 untergebracht und der pumpenferne Ableitungskanal 218 befindet sich im pumpenfernen Abschlußdeckel 74.

Wie gut aus Fig. 11 - 14 erkennbar, kann man nun durch Entfernen des pumpenfernen Abschlußdeckels 74, nach Trennen vom pumpenfernen Lagerstuhl 73, Entfernen des Statorgehäuses mit den Stirnflanschen 82, 83 einschließlich Mantelrohr 81, Motor-Stator 55 und äußerer Rohrwand 61,die innere Rohrwand 60′, beispielsweise nach Beschädigung, vergleichsweise leicht ausbauen und gegen ein entsprechendes Ersatzteil austauschen. Wichtig ist, daß dabei keine Schweißnähte zerstört bzw. beim späteren Zusammenbau neu geschweißt zu werden brauchen. Dies fällt besonders günstig ins Gewicht in Anwendungsfällen, wo an solche Schweißnähe hohe Qualitätsanforderungen gestellt werden, was häufig der Fall ist. Dies gilt auch für die Verwendung von solchen Spaltrohrmotoren SpM in Firmen oder geographischen Gegenden, in denen entsprechend qualifizierte Schweißarbeiten nicht durchgeführt werden können.

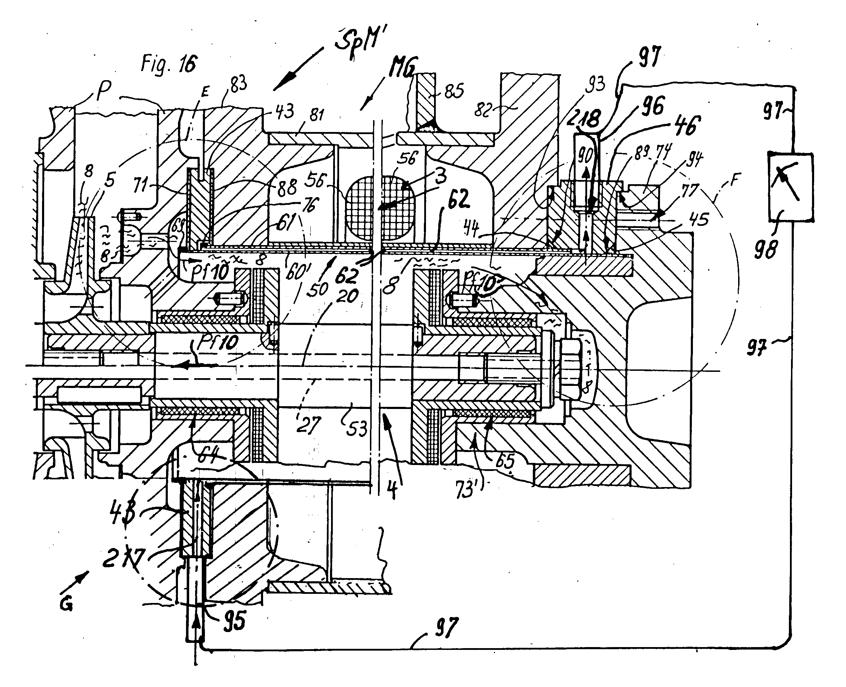

Aus Fig. 11 - 13 u. 15 geht auch gut die Ausbildung und Anbringung der äußeren Rohrwand 61 des Spaltrohres 50 beim Ausführungsbeispiel nach Fig. 11 hervor. Wie besonders gut aus Fig. 15 erkennbar, ist die äußere Rohrwand 61, im Längsschnit gesehen, im wesentlichen U-förmig ausgebildet. Dabei stellt diese äußere Rohrwand 61 den U-Steg dar, während die Dichtflansche 67 u. 68 die U-Schenkel bilden. Die im wesentlichen radial orienterten Dichtflansche 67 u. 68 sind an ihrem Innenrand in bekannter Weise zu Schweißlippen 57 und 58 abgewinkelt (Fig. 15) und die Teile 67, 68 und 61 stehen dort über entsprechende kreisringförmige Schweißnähte 76 miteinander in Verbindung, ähnlich wie dies bei der inneren Rohrwand 60′ vorstehend näher beschrieben wurde.

Die Wandstärke W der Rohrwände 214 u. 221 bzw. 60 u. 61 kann unterschiedlich oder gleich sein, und zwar sowohl bei Anbringung bei einer Pumpe S mit Spaltrohrmagnetkupplung als auch bei einer Pumpe mit Spaltrohrmotorantrieb; dabei kann das Einsatzgebiet der entsprechenden Spaltrohrmotorpumpen SpM oder beispielsweise Spaltrohrmagnetkupplungspumpen S eine Rolle für die Wahl der Wandstärken der Rohrwände 214, 221 bzw. 60, 61 spielen. Bei einer Spaltrohrmotorpumpe SpM, z. B. nach Fig. 11 - 13 wird man regelmäßig dafür sorgen, daß die Wandstärke $W_a$ der äußeren Rohrwand 61 dem Förderdruck in der Spaltrohrmotorpumpe SpM aushält, wenn die innere Rohrwand 60 bzw. 60′ einen Schaden erlitten hat. Unter normalen Betriebsbedingungen kommt man z. B. mit einer Wandstärke von 0,5 mm aus. Auch ist dort die äußere Rohrwand 61 gemäß Ausführungsbeispiel nach Fig. 11 - 15 nicht als separates Auswechselteil für diese Spaltrohrmotorpumpe SpM ausgebildet, da sie bei derartigen Spaltrohrmotorpumpen kaum gefährdet ist. Nötigenfalls kann man sie mit dem gesamten Motor-Stator, der insbesondere die Teile 55, 56 sowie 81 - 83 umfaßt, ausgetauscht werden. Bei Spaltrohrmotorpumpen SpM ist es häufig möglich, eine gegenüber der Wandstärke $W_a$ der äußeren Rohrwand 61 geringere Wandstärke $W_i$ bei der inneren Rohrwand 60 bzw. 60′ zu wählen, wenn auch hier darauf geachtet wird, daß die innere Rohrwand 60, 60′ dem Betriebsdruck des Fördermediums der Spaltrohrmotorpumpe SpM ohne praktisch ins Gewicht fallende Verformung aushält.

Bei Spaltrohrmotorpumpen SpM kommt es, wie eingangs erwähnt, gelegentlich zu Schäden an den Motorlagern 64 und 65, was eine Beschädigung der inneren Rohrwand 60 bzw. 60′ des Apaltrohres 50 nach sich ziehen kann. Gemäß der vorbeschriebenen Ausbildung des Motorteiles der Spaltrohrmotorpumpe SpM entsprechend den Figuren 11 - 15 läßt sich dann die innere Rohrwand 60′ vergleichsweise leicht austauschen, ohne daß Schweißarbeiten durchzuführen sind.

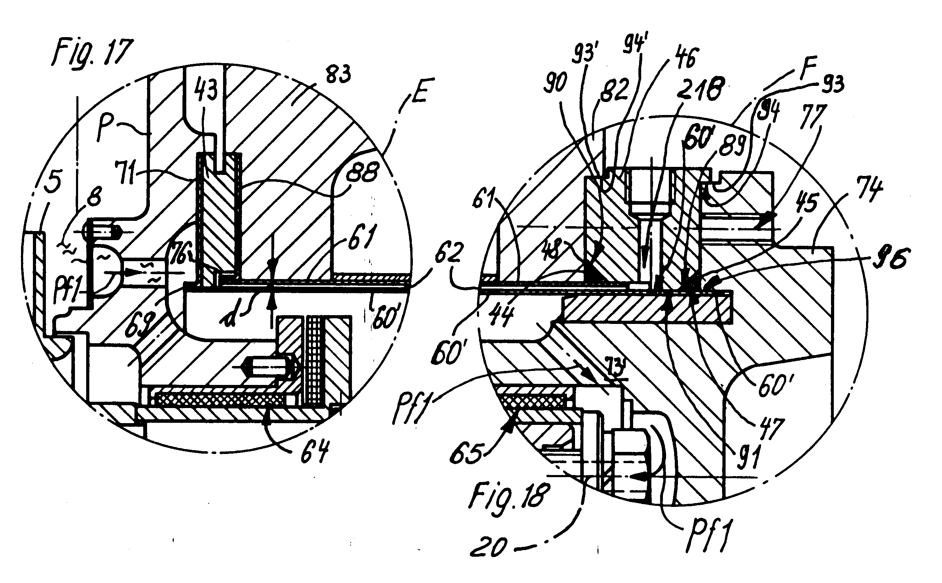

Eine zusätzliche Weiterbildung einer erfindungsgemäßen Spaltrohrmotorpumpe SpM′ ist in den Fig. 16 - 19 dargestellt. Dabei sind dort der besseren Übersicht wegen der mittlere Motorbereich mit dem Motor-Rotor 54 und dem zugehörigen Motor-Stator 55, wie sie im übrigen gut z. B. aus Fig. 11 erkennbar sind, weggelassen. Man erkennt in der teilweise im Schnitt gehaltenen Teil-Seitenansicht des Spaltrohrmotors SpM′ nach Fig. 16 sowohl das Pumpengehäuse P als auch das sich rechts daran anschließende Motorteil. Im Pumpengehäuse erkennt man das Kreiselpumpen-Laufrad 5 und das mit gewellten Strichen angedeutete Fördermedium. Dieses wird in bekannter Weise in einem abgezweigten Teilstrom gemäß den Pfeilen Pf 10 aus dem Laufradraum des Pumpengehäuses P durch den Spaltrohrraum in den Freiraum hinter der Antriebswelle 53 geführt und kann dann dort durch eine zentrale Wellenbohrung 27 wieder zu einer Stelle niedrigeren Druckes im Bereich des Pumpengehäuses P fließen. Bei der Ausführung nach Fig. 16 - 19 sind, wie bereits in Verbindung mit Fig. 11 - 13 erläutert, die innere Rohrwand 60′ dmit einem pumpenseitigen Dichtflansch 71 über eine Schweißnaht 69 und die äußere Rohrwand 61 über eine Schweißnaht 76 mit einem äußeren Dichtflansch 88 dicht verbunden (vgl. insbesondere Fig. 16 und 17). Der pumpenseitige Dichtflansch 71 und der äußere Dichtflansch 88 liegen je an den Flachseiten eines Verbindungsflansches 43 an. Alle drei Teile 71, 43 und 88 werden dichtend zwischen dem Pumpengehäuse P und dem pumpenseitigen Stirnflansch 83 des im ganzen mit MG bezeichneten Motorgehäuses dichtend eingeklemmt. Das Motorgehäuse MG umfaßt insbesondere die beiden Stirnflansche 82 und 83 sowie den dazwischen liegenden Ringmantel 81. Im Verbindungsflansch 43 ist in der bereits beschriebenen Weise ein Zuleitungskanal 217 vorgesehen, durch den Heiz- oder Kühlflüssigkeit in den Wandungsinnenraum 62 zwischen der inneren Rohrwand 60′ und der äußeren Rohrwand 61 des im ganzen mit 50 bezeichneten doppelwandigen Spaltrohres einfließen kann. Am pumpenfernen Ende weist die Spaltrohrmotorpumpe SpM′ nach Fig. 16 - 19 im Bereich der pumpenfernen Enden der Rohrwände 60′ und 61 einen Dichtflansch 46 auf, in dem sich die Ableitung 218 für den Heiz- oder Kühlmittelstrom befindet. Gemäß der vorteilhaften Weiterbildung der Erfindung haben die den Schweißnähten 69 und 76 gegenüberliegenden Enden der Rohrwände 60′ und 61 jedoch keine den Dichtflanschen 71 und 88 entsprechende angeschweißte Flansche od. dgl. Vielmehr ist am pumpenfernen Ende des Motorteiles der Dichtflansch 46 an seiner axialen Innenbohrung mit zwei Kantenanphasungen 89 und 90 versehen (Fig. 16 u. 18). Diese bilden zusammen mit dem pumpenfernen Abschlußflansch 74 je einen Ringraum 47 und 48, die je einen Dichtring 45 und 44 enthalten. Wie gut aus Fig. 18 erkennbar, dichtet der pumpennahe Dichtring 44 die äußere Rohrwand 61 und der pumpenferne Dichtring 45 die innere Rohrwand 60′ ab. In Achsrichtung gesehen, setzt der Ableitungskanal 218 zwischen diesen beiden Dichtringen 44 und 45 an und die äußere Rohrwand 61 endet, in Achsichtung gesehen, vor dem Ableitungskanal 218. Dementsprechend kann Heiz- oder Kühlmittel aus dem Wandungsinnenraum 62 des Spaltrohres 50 in der bereits beschriebenen Weise beim Ableitungskanal 218 austreten. Die vorbeschriebene Ausbildung hat vor allem den Vorteil, daß bei Beschädigung einer Rohrwand 60′ oder 61 diese zusammen mit dem jeweiligen Dichtflansch 71 bzw. 88 als mit den übrigen Bauteilen der Spaltrohrmotorpumpe SpM unverschweißtes, separates Bauteil gegen eine unbeschädigte, neue Rohrwand 60′ mit Dichtflansch 71 bzw. äußerer Rohrwand 61 mit Dichtflansch 88 ausgetauscht werden kann. Es braucht weder eine Schweißnaht zerstört zu werden, noch eine solche mit der notwendigen Präzision und Dichtigkeit angefertigt werden.

Aus Gründen einer leichterten Montage und Demontage ist es vorteilhaft, wenn die Dichtflansche 71 und 88 an den jeweils pumpenseitigen Enden der Rohrwänden 60 u. 61 und die Dichtringe 44 und 45 sowie der zugehörige Dichtflansch 46 am pumpenfernen Ende angebracht sind. Eine abgewandelte Anordnung der fest und dicht mit den Rohrwänden 60 u. 61 verschweißten Dichtflansche 70 u. 88 an den pumpenfernen Enden dieser Rohrwände 60, 61 wäre im Prinzip allerdings auch möglich.

Wie bereits erwähnt, kann der lichte Abstand zwischen den Rohrwänden 60 u. 61 sehr klein gehalten werden; wie Versuche überraschenderweise gezeigt haben, kommt man mit lichten Abständen von 0,1 mm - 0,5 mm aus. Dies gilt sowohl für die Wandungsinnenräume des rohrartigen Teiles von Spaltrohrtöpfen 207 als auch für die Wandungsinennräume 62 von Spaltrohrmotorpumpen SpM. In den Zeichnungen sind diese lichten Abständen d (vgl. auch Fig. 17) der besseren Übersicht wegen vergrößert dargestellt. Infolge der geringen Abmessungen tritt nur eine vergleichsweise geringe Verschlechterung der Übertragungskräfte von äußerem Antriebs- auf inneres Drehteil auf, was in keinem Verhältnis zu den Vorteilen der erfindungsgemäßen Pumpe S bzw. SpM steht.

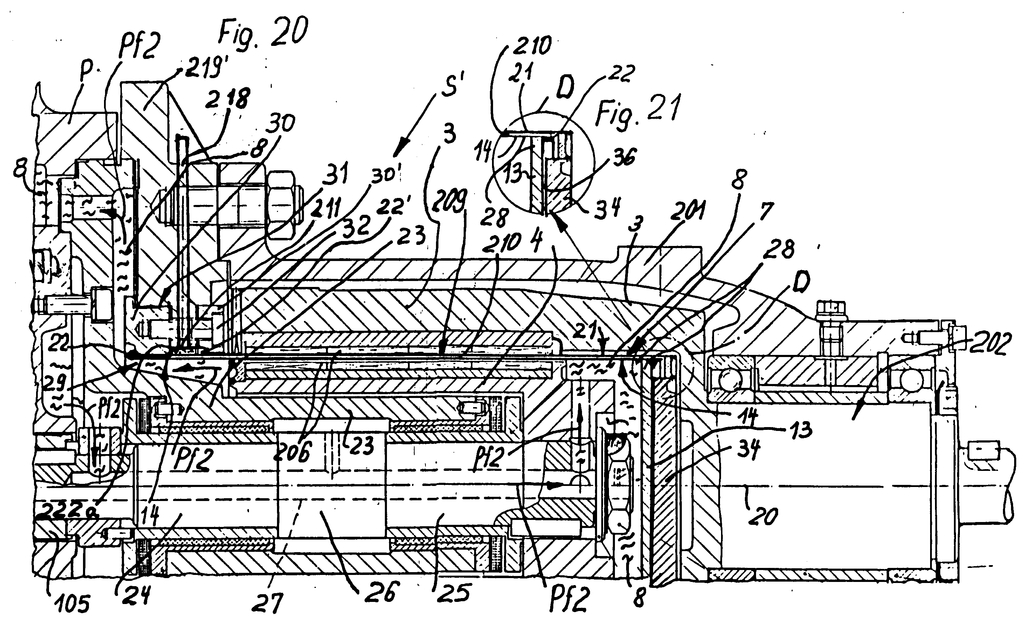

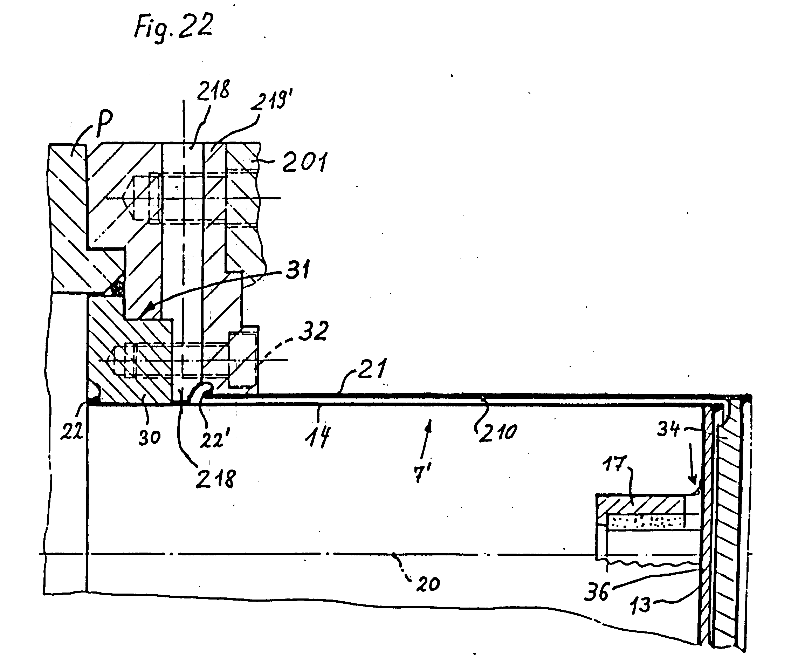

Die Ausführung der Spaltrohrmotorpumpe SpM′ gemäß Fig. 16 bis 19 hat gegenüber der Ausführung nach Fig. 11 bis 13 auch noch folgende Vorteile : Wie besonders gut aus Fig. 16 u. 18 erkennbar, weist der Dichtflansch 46 eine kreisförmige Zentrierbohrung 94 auf, die in einen entsprechenden Zentrierstutzen 93 des Abschlußdeckels 74 eingreift. Der Dichtflansch 46 hat seinerseits einen Zentrierstutzen 93′, der in eine Zentrierbohrung 94′ eingesetzt ist. Dadurch wird eine exakte Halterung des pumpenfernen Lagers 65 sehr begünstigt. Auch übt das dichtende Anbringen des Dichtflansches 46 und das erwünschte Aufbringen entsprechender Dichtdrücke durch axiales Festschrauben am pumpenfernen Stirnflansch 82 und das entsprechende Anbringen des pumpenfernen Abschlußdeckels 74 am Dichtflansch 46 keinerlei unerwünschten Einfluß auf die axiale Erstreckung der inneren und/oder äußeren Rohrwände 60′ und 61′ aus. Wie bereits vorstehend geschehen, sind auch in den Fig. 16 - 19 die Drehachse der Welle 53 wiederum mit 20, das pumpennahe Lager mit 64, die Wickelköpfe mit 56, der das pumpenferne Lager 65 umschließende, einstückig mit dem Abschlußdeckel 74 verbundene pumpenferne Lagerstuhl mit 73′ sowie die Verbindungsschrauben für den Abschlußdeckel 74 mit 77 bezeichnet. 91 ist ein Ringschlitz, der zwischen dem rückwärtigen Teil des Dichtflansches 46 und dem benachbarten Teil des Abschlußdeckels gebildet und zur Aufnahme der in diesen Bereich hineinragenden inneren Rohrwand 60′ vorgesehen ist. In Fig. 20 ist eine gegenüber Fig. 2 abgewandelte Ausführungsform einer Spaltrohrmagnetkupplungspumpe S′ dargestellt, bei der, ähnlich wie bei der letztbeschriebenen Ausführungsform der Spaltrohrmotorpumpe SpM′, die entsprechenden Maschinenteile bei beschädigter Spaltrohrinnenwand und/oder Spaltrohraußenwand jeweils separat ausgetauscht werden können, ohne daß Schweißnähte zu zerstören oder neu zu erstellen sind. Fig. 21 zeigt dabei in vergrößertem Maßstab die bei D bei Fig. 20 strichpunktiert umkreiste Einzelheit, Fig. 22 einen Spaltrohrtopf 7′ ähnlich dem, der in der Spaltrohrmagnetkupplungspumpe S′ nach Fig. 20 enthalten ist. Die Spaltrohrmagnetkupplungspumpe S′ gemäß Fig. 20 weist innere Gleitlager 24 und 25 auf, in denen die Antriebswelle 26 lagert. Diese verbindet das innere Drehteil 4 der Magnetkupplung drehfest mit einem im Wellenansatz erkennbaren Pumpenlaufrad 105 ähnlich dem aus Fig. 1. Am inneren Drehteil 4 und am äußeren Antriebsteil 3 befinden sich analog Fig .2 die Magnete 206. Die Antriebswelle 26 weist eine zentrale Wellenbohrung 27 auf, durch die in bekannter Weise ein abgezweigter Teilstrom des Fördermediums entsprechenden den Pfeilen Pf 2 durch das im ganzen mit 209 bezeichnete Spaltrohr geführt wird. Es ist wiederum doppelwandig mit einer inneren Rohrwand 14 und einer äußeren Rohrwand 21 versehen, wie dies in Verbindung mit Fig. 2 bei den dortigen Rohrwänden 214 und 221 bereits näher erläutert wurde. Dabei zeichnet sich jedoch die Ausführung nach Fig. 20 dadurch aus, daß sowohl die innere Rohrwand 14 als auch die äußere Rohrwand 21 ausbaubar ist, ohne daß z. B. eine Schweißnaht zerstört zu werden braucht; es braucht lediglich die jeweils mit der jeweiligen Rohrwand verbundene Topfbodenplatte 13 bzw. die Topfbodenaußenwand 34 mit-ausgebaut zu werden. Dazu ist gemäß Fig .20 das pumpenseitige Ende 29 der inneren Rohrwand 14 mit einem Befestigungsflansch 30 versehen, der in einer entsprechenden Aussparung 31 eines Verbindungsflansches 219′ mittels Schrauben 32 dicht, jedoch lösbar befestigt ist. Am Ausschnitt D von Fig. 20, der vergrößert in Fig. 21 dargestellt ist, erkennt man noch gut, daß die Topfbodenplatte 13 des inenren Spaltrohrtopfes 28 vollständig von der Topfbodenaußenwand 34 getrennt ist. Die innere Rohrwand 14 ist an ihrem pumpenseitigen Ende 29 in der bereits beschriebenen Weise mittels einer kreisringförmigen Schweißnaht 22 mit dem äußeren Befestigungsflansch 30 verbunden. Analog ist die äußere Rohrwand 21 mit einem äußeren Befestigungsflansch 30′ über eine kreisringförmige Schweißnaht 22′ verbunden. Die beiden Befestigungsflansche 30 und 30′ sind mit Hilfe von Schrauben 32 fest und dichtend am Verbindungsflansch 219 angebracht. Dieser weist eine Ableitung 218 auf, die in bereits beschriebener Weise in offener Verbindung mit dem Wandungsinnenraum 210 des rohrartigen Teiles 209 des Spaltrohrtopfes 207 steht. Auch bei Fig. 20 ist die Drehachse der Antriebswelle 26 mit 20, die im Lagergehäuse-Anschluß 210 gelagerte Antriebswelle mit 202, die Flüssigkeit des abgezweigten Teilstromes mit 8 und das Pumpengehäuse mit P bezeichnet. 31 ist die entsprechende Aussparung zur Aufnahme des Befestigungsflansches 30 im Verbindungsflansch 219′ und mit 211 ist im Bereich einer halbkreisnutförmigen Aussparung 222 a, die derjenigen aus Fig. 2 entspricht, mit Pünktchen die Heiz- oder Kühlflüssigkeit angedeutet. 23 ist bei der Ausführung nach Fig. 20 ein rohrförmiger Lagerträger, der einstückig mit einem pumpenseitigen Anschlußflansch am Pumpengehäuse P befestigt ist.

In Fig. 22 ist der in Verbindung mit Fig. 20 vorstehend beschriebene Spaltrohrtopf 7 zusammen mit seinen Anschlußmitteln in etwas abgewandelter Form und vergrößerter Darstellungsweise wiedergegeben. Auch bei Fig. 22 hat der Spaltrohrtopf 7′ eine äußere Rohrwand 21 und eine innere Rohrwand 14. Letzere ist wieder mittels einer Schweißnaht 22 an einem Befestigungsflansch 30 angebracht, der seinerseits in einer Aussparung 31 des Verbindungsflansches 219′ mit Hilfe von Schrauben 32 festgelegt ist. Die äußere Rohrwand 21 des Spaltrohrtopfes 7′ ist unmittelbar am Verbindungsflansch 219′ mittels der Schweißnaht 22′ befestigt. Im in Fig. 22 dargestellten oberen Teil des

Verbindungsflansches 219′ erkennt man den Ableitungskanal 218 für die Heiz- oder Kühlflüssigkeit. Am Verbindungsflansch 219′ ist der Lagergehäuse-Anschluß 210 befestigt, ähnlich wie es Fig. 20 zeigt. Der Verbindungsflansch 219′ und die entsprechenden, benachbarten Teile, insbesondere 210, 30, 32, 14 u. 21 sind in der unteren, in Fig. 22 nicht dargestellten Figurenhälfte vorgesehen, wo dann, z. B. analog zu Fig. 2, an Stelle des Ableitungskanals 218 der Zuleitungskanal 217 für das Heiz- oder Kühlmedium vorgesehen ist. Wie gut erkennbar, kann die äußere Rohrwand 1 zusammen mit der Topfbodenaußenwand 34 und dem Verbindungsflansch 219 zunächst gemeinsam mit dem Befestigungsflansch 30 und der daran angebrachten inneren Rohrwand 14 nebst Topfbodenplatte 13 ausgebaut werden. Dann können die innere Rohrwand 14 nebst den daran angeschweißten Teilen 13 und 17 durch Lösen des Befestigungsflansches 30 noch vom Verbindungsflansch 219′ getrennt werden, so daß auch hier ein separater Austausch der inneren Rohrwand 14 und/oder der äußeren Rohrwand 21 des Spaltrohrtopfes ohne Zerstören von Schweißnähten und ohne deren Neuanfertigung vergleichsweise einfach möglich ist. 17 stellt in Fig. 22 einen Lagerstuhl dar, der an der Topfbodenplatte 13 befestigt ist und zur pumpenfernen Lagerung des inneren Drehteiles dient.

In Fig. 16 erkennt man noch eine vorteilhafte Weiterbildung der Erfindung. Dort ist bei den Zuleitungs- und Ableitungskanälen 217, 218 eine Meßanordnung 95 - 98 vorgesehen. Dabei stellen stark schematisiert 95 ein Mengenmeßgerät oder ein Druckmeßgerät für die eintretende Menge bzw. den Eintrittsdruck des Heiz- und Kühlmittels am Zuleitungskanal 217 dar, während mit 96 ein Mengenmeßgerät oder ein Druckmeßgerät für die am Ableitungskanal 218 austretende Heiz- oder Kühlmedium-Menge oder für deren Druck darstellt. Diese beiden Meßgeräte 95 u. 96 stehen über elektrische Leitungen 97 mit einem ebenfalls schematisch dargestellten Meß- und Auswertgerät 98 in Verbindung. Arbeitet die Meßanordnung 95 - 98 mit Differenzdruck-Messung, wird der normale Druckverlust zwischen Zuleitungskanal 217 und Ableitungskanal 218 bzw. den dort befindlichen Druckmessern 95 und 96 bei Normalbetrieb beim Vergleichs- und Anzeigegerät 98 berücksichtigt. Kommt es zu einer Beschädigung der inneren Rohrwand 60′ und herrscht im Motor-Rotorraum, was gewöhnlich der Fall ist, ein anderer Druck als im Heiz- oder Kühlkreislauf, wirkt sich dies in Form einer Druckveränderung im Heiz- und Kühlkreislauf aus, so daß eine Beschädigung der inneren Rohrwand 60′ sofort angezeigt wird. Dies kann in Form eines Warnlichtes erfolgen. Zweckmäßigerweise wird gleichzeitig ein Schaltvorgang zum Stillsetzen der Pumpe SpM′ ausgelöst. Analoges gilt, wenn unter den vorerwähnten Verhältnissen die Meßgeräte 95 und 96 als Durchflußmengen-Meßgerät ausgebildet sind. Ist der Druck des durch den Motor-Rotorraum laufenden abgezweigten Teilstromes größer als der Heiz- oder Kühlmittelstrom, und ist die innere Rohrwand so beschädigt, daß sie Fördermedium durchläßt, verändert sich der Durchfluß, was vom Anzeigegerät 98 entsprechend erfaßt und in entsprechende Signale und/oder Schaltimpulse umgesetzt wird. Umgekehrt gilt ähnliches, wenn der Druck des Heiz- oder Kühlmittelstromes größer als der Druck des den Motor-Rotorraum durchfließenden abgezweigten Teilstromes ist. Dann kommt es auch zu Veränderungen der Meßwerte beim Gerät 98. Der Fluß des Heiz- oder Kühlmittels wird also mit zur Überwachung und Sicherung der Spaltrohrmotorpumpe SpM′ ausgenutzt. Die gleiche Meßanordnung 95 - 98 kann auch bei Spaltrohrmagnetpumpen S benutzt werden.

Aus Fig. 11 und die diese ergänzenden Figuren 12 bis 15 sowie aus Fig. 10 sind noch weitere erfindungsgemäße zusätzliche Sicherheitsmaßnahmen zu erkennen.

Wird zum Beispiel bei der Ausführung nach Fig .10 das am meisten gefährdete Teil des dortigen Spaltrohres 50, nämlich die innere Rohrwand 61 so beschädigt, daß Förderflüssigkeit aus Motor-Rotorraum durch sie hindurchdringen kann, besteht immer noch ein zweifacher Schutz gegen Austreten des Fördermediums oder dagegen, daß z. B. ein aggressives Fördermedium dem Motorstator 55 oder die Motorwicklung 56 beschädigt: Das Außenrohr 60 des doppelwandigen Spaltrohres 50 verhindert die Beschädigung dieser Innenteile 55 und 56 des äußeren Antriebsteiles 3 des Spaltrohrmotors SpM. In Kombination mit der an sich bekannten Kunststoff-Füllung 86 und der geschlossenen Abkapselung 80 u. 86 und der erwähnten geschlossenen Abkapselung 84 des Motorbereiches erhält man bereits eine zweifache Sicherheit gegen Austreten von z. B. aggressivem oder giftigem Fördermedium selbst im Havariefall.

Eine zusätzliche Sicherung des Motorteiles des Spaltrohrmotors erhält man, wenn man die äußere Wand 61 für sich noch einmal doppelwandig ausbildet und der von den entsprechenden Rohrwänden 61 a und 61 b umschlossenen Raum 10 a ein Anzeigemedium 11 a oder eine Anzeigevorrichtung 12 aufweist, mittels der Wandundichtigkeiten geräteaußenseitig anzeigbar sind. Der Wandungsinnenraum 10 a kann z. B. so schmal sein, daß er gerade noch gasdurchlässig ist, so daß die Dicke der beiden die Außenwandung 61 bildenden Wandungsteile 61 a und 61 b praktisch nicht größer ist als eine einzelne äußere Spaltrohrwand 61. Als Anzeigemedium 11 a kann eine Flüssigkeit oder ein Gas dienen, welches dann z. B. auf ein Druckmeßgerät 37 (Fig. 15) wirkt. Im Wandungsinnenraum 61 b kann jedoch auch eine Signalfolie 12 zur geräteaußenseitigen Anzeige mechanischer Beschädigungen des Außenwandteiles 61 b dr Außenwand 61 vorgesehen sein. Dabei ist dann vorzugsweise geräteaußenseitig ein elektrisches, gegebenenfalls mit einer elektrischen Schalteinrichtung und/oder einer Warnlampe versehenes Anzeigegerät analog dem erwähnten Druckanzeigegerät 37 vorgesehen. Auf ein Druckanzeigegerät kann auch das die beschädigte Innenwand 61 durchdringende Heiz- oder Kühlmedium wirken und die entsprechenden Anzeigen und Schaltvorgänge bewirken. Auf diese Weise erhält die Spaltrohrmotorpumpe eine Mehrfachsicherung nach außen, so daß es praktisch ausgechlossen ist, daß im Havariefall Fördermedium und/oder Heiz- bzw. Kühlmedium austreten können. Man ist dementsprechend mit der Wahl des Heiz- oder Kühlmediums praktisch nicht durch Sicherheitsüberlegungen eingeengt. Im Bedarfsfall, wenn es z. B. darauf ankommt, daß keine Verunreinigungen bim Fördermedium auftreten sollen und dieses andererseits bei Stillstandstemperatur nicht zu zähflüssig ist, kann man z. B. auch aggressive Fördermedien z. B. gleichzeitig als Temperiermedien verwenden und man behält auch im Havariefall, das heißt bei Zerstören eines Teiles 61 b der Spaltrohraußenwand 61 noch ein vollständig in sich hermetisch abgeschlossenes System.

Analoges gilt, wenn man, wie in Fig. 14 dargestellt, die Spaltrohrinnenwand 60 ″ zweiwandig mit den Wandteilen 60 a und 60 b ausbildet, wobei in dem von diesen beiden Wänden 60 a und 60 b umschlossenen Wandungsinnenraum 10 d (Fig. 14) wiederum ein Anzeigemedium 11 a oder eine Vorrichtung 12 vorgesehen ist, mittels der Wandundichtigkeiten in der schon beschriebenen Weise geräteaußenseitig anzeigbar sind.

Die vorerwähnten Gesichtspunkten gelten auch für Spaltrohrmagnetkupplungspumpen S.

Insgesamt werden durch die Erfindung Pumpen, sei es mit Spaltrohrmotor - sei es mit Spaltrohrmagnetkupplungsantrieb geschaffen, die sehr umweltfreundlich betrieben werden und dies auch im Havariefall bleiben. Gemäß den Weiterbildungen insbesondere gemäß Fig. 16 - 22 können derartige Pumpen auch im Havariefall verhältnismäßig einfach repariert und instandgehalten werden, selbst wenn kein qualifiziertes Personal, z. B. für qualifizierte Schweißarbeiten zur Verfügung steht.

Schließlich ist man in der Wahl der Heiz- und Kühlmedien vergleichsweise frei bei aufrechterhaltener großer Sicherheit des Pumpbetriebes, wenn man nicht nur das Spaltrohr doppel- sondern mehrfach-wandig gemäß den Figuren 14 und 15 ausbildet.

## Patentansprüche

1. Pumpen-Motor-Aggregat (S, SpM) mit einem Spaltrohrmagnetkupplungs- oder einem mit einem pumpenfernen Abschlußteil (46) versehenen Spaltrohrmtotor-Antrieb, wobei dieser Antrieb ein drehbares, mit dem in einem Pumpengehäuse (P) befindlichen Pumpenlaufrad (105) verbundenes inneres Drehteil (54, 104) sowie ein damit magnetisch gekoppeltes äußeres Antriebsteil (103, 55) hat und das innere Drehteil vom äußeren Antriebsteil mittels eines Spaltrohres (SR, 50) hermetisch voneinander getrennt und ein vom Hauptförderstrom der Pumpe abgezweigter, zum Schmieren der Pumpen-Gleitlager (112, 212, 64, 65), ggf. zum Abführen von Verlustwärme des Antriebs sowie der Lagerwärme dienender Teilstrom durch entsprechender Kanäle durch das Innere des Spaltrohres geführt sowie in den Hauptförderstrom zurückgeleitet sind, wobei das pumpennahe Ende des Spaltrohres einen von der Antriebsachse (53) des Aggregates (S, SpM) wegweisenden, mindestens ein Zuflußkanal aufweisenden Verbindungsflansch (19, 219) hat und ein mit diesem Verbindungsflansch benachbarter Abschnitt des Spaltrohres mit einem vom Fördermedium unabhängigen Kühl- oder Heizmedium beaufschlagbar ist, dadurch gekennzeichnet, daß beim Spaltrohrmagnetkupplungs-Antrieb (M) das innere Drehteil (204) vom äußeren Antriebsteil (103) mittels eines wenigstens in seinem Axialbereich durchgehend mehrwandigen Spaltrohrtopfes (R, 207) getrennt ist, dessen Boden (228) mindestens abschnittweise doppelwandig ist, dessen Topfbodenwandungsinnenraum (233) mit den Strömungsführungsstege (225, 226) aufweisenden Wandungsinnenraum (210) des axialen Spaltrohrteiles in Verbindung steht, oder daß beim Spaltrohrmotor-Antrieb (SpM) das innere Drehteil (54) vom äußeren Antriebsteil (55) durch ein wenigstens doppelwandiges axiales Spaltrohr (50) gegetrennt ist, dessen Rohrwände (60, 61) an ihrem pumpenfernen Ende dicht mit einem weiteren, pumpenfernen Verbindungsflansch (19') einem pumpenfernen Abschlußdeckel (74), Dichtflansch (46) od. dgl. Abschlußteil verbunden sind, wobei in je einem pumpennahen Verbindungsflansch (19, 219) des Spaltrohrtropfes (207) oder in einem pumpennahen Verbindungsflansch (19', 219) des Motorteiles einer Spaltrohrmotorpumpe (SpM) mindestens ein Zuleitungs- oder Ableitungskanal (17, 217 oder 18, 218) und der Spaltrohrmagnetkupplungspumpe (S) im pumpenseitigen Verbindungsflansch bzw. bei der Spaltrohrmotorpumpe am pumpenfernen Verbindungsflansch (19') je nach dem ob im pumpennahen Flansch ein Zuleitungs- bzw. ein Ableitungskanal angeordnet ist ein Ableitungs- oder Zuleitungskanal (18, 218 oder 17, 217) zur Aufnahme und zum Durchfluß eines Kühl- oder Heizmediums (214) vorgesehen ist.

2. Pumpen-Motor-Aggregat nach Anspruch 1, dadurch gekennzeichnet, daß der Abstand (d) der Spaltrohrwände (14, 21; 214, 221; 60, 61) 0,1 Millimeter bis 3 Millimeter, vorzugsweise 0,1 Millimeter bis 0,5 Millimeter beträgt.

3. Pumpen-Motor-Aggregat nach Anspruch 1 oder 2, dadurch gekennzeichnet, daß die Strömungsführungsstege (225, 226) sich bis nahe dem pumpenfernen Ende des axialen Spaltrohres erstrecken und vorzugsweise axial angeordnet sind.

4. Pumpen-Motor-Aggregat nach einem der Ansprüche 1 bis 3, dadurch gekennzeichnet, daß wenigstens eine axiale Rohrwand ihres Spaltrohres oder Spaltrohrtopfes, vorzugsweise die jeweils äußere Rohrwand (21, 221, 61) eine auf die Druckverhältnisse beim Pumpenbetrieb abgestimmte Wandstärke (Wa) aufweist und daß ggf. die benachbarte innere Rohrwand (14, 214, 60) eine wesentlich geringere Wandstärke (Wi) hat und dabei zweckmäßigerweise so elastisch dehnbar ausgebildet ist, daß sie sich bei beschädigter äußerer Rohrwand an diese abstützend anlegen kann.

5. Pumpen-Motor-Aggregat nach einem der Ansprüche 1 bis 4, dadurch gekennzeichnet, daß die innere und/oder die äußere Rohrwand (14, 21, 214, 221; 60, 61) des Spaltrohres (7, 207, 9, 209, 50) separat ausbaubar ist und dabei vorzugsweise pumpenseitig einen radialen nach außen gerichteten Dichtflansch (30; 71, 88) und am pumpenfernen Ende Dichtungen (40, 45, 72) oder eine seperate Topfbodenplatte (213) aufweist.

6. Pumpen-Motor-Aggregat nach Anspruch 5, dadurch gekennzeichnet, daß wenigstens eine, vozugsweise beide axiale Rohrwände (60, 61) des Spaltrohres (50) einer Spaltrohrmotorpumpe (SpM') bei der Innenbohrung (51) eines Dichtflansches (46) enden und dort jeweils mit Hilfe eines Dichtringes (44, 45) abgedichtet sind, wobei sich zweckmäßigerweise an dem dertigen Wandungsinnenraum (62) der Rohrwände der Ableitungskanal (218) für das Kühl- oder Heizmedium (214) anschließt.

7. Pumpen-Motor-Aggregat nach Anspruch 6, dadurch gekennzeichnet, daß der zweckmäßigerweise einen mit dem Wandungsinnenraum (62) verbundenen Ableitungskanal (218) aufweisende Dichtflansch (46) mindestens einen Ringraum (48) fur die Aufnahme eines elastischen Dichtringes (44) für die Abdichtung der äußeren Rohrwand (61), vorzugsweise zwei Ringräume (47, 48) für die Aufnahme von zwei Dichtungen (44, 45) für die Abdichtung der inneren und der äußeren Rohrwand aufweist sowie zweckmäßigerweise einen Zentrierstutzen (93') zun konzentrischen Festlegen bezüglich der Drehachse (20) der Spaltrohrmotorpumpe (SpM') am Motorgehäuse (MG), vorzugsweise am Stirnflansch (82) hat.

8. Pumpen-Motor-Aggregat nach einem der Ansprüche 5 bis 7, dadurch gekennzeichnet, daß ein pumperferner Abschlußdeckel (74) und ein pumpenferner Lagerstuhl (73') einstückig ausgebildet sind, im Bereich des pumpenfernen Endes als innere Zentrieranschlag (96) für das pumpenferne Ende der inneren Rohrwand (60') dient und der pumpenferne Anschlußflansch (74) einen Zentrierstutzen (93') zum konzentrischen Halten innerhalb einer Zentriebohrung (94') des Dichtringes (44) aufweist.

9. Pumpen-Motor-Aggregat nach einem der Ansprüche 1 bis 8, dadurch gekennzeichnet, daß das in dem Wandungsinnenraum (Innenäumen) des Spaltrohres bzw. Spaltrohrtopfes vorge-Sehene Kühl- oder Heizmedium als Anzeigemedium zu einer geräteaußenseitig angeordneten Wandundichtigkeitsanzeige geführt ist.

**Claims**

1. A pump-motor unit (S, SpM) with an encased magnetic coupling or a canned motor pump provided with an end member (46) remote from the pump, said drive having a rototable inner-rotary member (54, 104) connected to the pump impeller (105) situated in a pump casing (P) and an outer driving member (103, 55) magnetically coupled thereto and the inner rotary member being hermetically separated from the outer driving member by means of a can (SR, 50), and a partial flow which is branched off from the main delivery flow of the pump and serves for lubricating the plain bearings (112, 212, 64, 65) of the pump, possibly for dissipating the heat loss of the drive and the bearing heat, being conducted through respective conduits through the interior of the can and returned to the main delivery flow, the can end proximate to the pump having a connecting flange (19, 219) which points-away from the drive shaft (53) of the unit (S, SpM) and has at least one inflow conduit and a can portion adjacent to said connecting flange being adapted to have applied thereto a coolant or heating medium independent of the pumping medium, characterized in that in the case of an encased magnetic coupling (M), the inner rotary member (204) is separated from the outer driving member (103) by means of a case (R, 207) multi-walled throughout at least the axial area thereof, the base (228) of said case being double-walled at least in sections, the wall interior (233) of said base communicating with the wall interior (210) which presents the flow guiding webs (225, 226) and belongs to the axial tubular part, or that in the case of the canned motor pump (SpM)the inner rotary member (54) is separated from the outer driving member (55) by an at least double-walled axial can (50), the tubular walls (60, 61) thereof at their end remote from the pump being tightly connected to a further connecting flange(19')remote from the pump, a cover plate (74) remote from the pump, sealing flange (46) or like end member, in each one connecting flange (19, 219) proximate to the pump and belonging to the case (207) or in a connecting flange (19', 219) proximate to the pump and belonging to the motor part of a canned motor pump (SpM) at least one supply or discharge conduit (17, 217 or 18, 218) is provided and in the case of the pump with an encased magnetic coupling (5) in the coupling flange in the direction of the pump or in the case of the canned motor pump at the connecting flange (19') remote from the pump-depending on whether a supply conduit or discharge conduit is arranged in the flange proximate to the pump - a discharge or supply conduit (18, 218 or 17, 217) is provided for receiving and for the passage of a coolant or heating medium (214).

2. A pump-motor unit as claimed in claim 1, characterized in that, the clearance (d) of the can walls (14, 21; 214, 221; 60, 61) is 0.1 to 3 millimetres, preferably 0.1 to 0.5 millimetres.

3. A pump-motor unit as claimed in claim 1 or claim 2, characterized in that the flow guiding webs (225, 226) extend close to that end of the axial can which is remote from the pump and are preferably axially arranged.

4. A pump-motor unit as claimed in any one of claims 1 to 3, characterized in that at least one axial tubular wall of the can or case thereof, preferably the outer tubular wall (21, 221, 61) in each case has a wall thickness ($W_a$) adapted to the pressure conditions when the pump is in use and that the neighbouring inner tubular wall (14, 214, 60) may have a considerably smaller wall thickness ($W_i$) and suitably be elastically extensible in such a way as to be capable of lying supportingly against the outer tubular wall if the latter is damaged.

5. A pump-motor unit as claimed in any one of claims 1 to 4, characterized in that the inner and/or the outer tubular wall (14, 21, 214, 221; 60, 61) of the can (7, 207, 9, 209, 50) is separately detachable and preferably has in the direction of the pump a radial outwardly directed sealing flange (30; 71, 88) and, at the end remote from the pump, seals (40, 45, 72) or a separate baseplate (213).

6. A pump-motor unit as claimed in claim 5, characterized in that at least one, preferably both axial tubular walls (60, 61) of the can (50) of a canned motor pump (SpM') end at the inner bore (51) of a sealing flange (46) and there are in each case sealed with the aid of a sealing ring (44, 45), the discharge conduit (218) for the coolant or heating medium (214) suitably adjoining the wall interior (62) there of the tubular walls.

7. A pump-motor unit as claimed in claim 6, characterized in that the sealing flange (46) suitably having a discharge conduit (218) connected to the wall interior (62) has at least one annulus (48) for receiving an elastic sealing ring (44) for the sealing of the outer tubular wall (61), preferably two annuli (47, 48) for receiving two seals (44, 45) for the sealing of the inner and outer tubular wall, as well as suitably a centring piece (93') for concentric fixation with respect to the axis of rotation (20) of the canned motor pump (SpM') at the motor casing (MG), preferably at the front flange (82).

8. A pump-motor unit as claimed in any one of claims 5 to 7, characterized in that a cover plate (74) remote from the pump and a bearing block (73') remote from the pump are integrally formed, serving in the area of the end remote from the pump as an inner centring stop (96) for the inner tubular wall (60') end remote from the pump, and the mounting flange (74) remote from the pump has a centring piece (93') for concentric retention inside a centre bore (94') of the sealing ring (44).

9. A pump-motor unit as claimed in any one of claims 1 to 8, characterized in that the coolant or heating medium provided in the wall interior (interiors) of the can or case is guided as an indicating medium to a wall leakage indicator arranged externally of the appliance.

**Revendications**

1. Bloc moteur-pompe (S, SpM) avec un entraînement à accouplement magnétique à gaine ou avec un entraînement par moteur à gaine pourvu d'un élément de fermeture (46) éloigné de la pompe, ce mécanisme d'entraînement comportant un élément tournant (54, 104) intérieur relié avec la roue (105) se trouvant dans un carter de pompe (P), ainsi qu'un élément d'entraînement (103, 55) extérieur, accouplé magnétiquement avec l'élément tournant et l'élément tournant intérieur étant hermétiquement séparé de l'élément d'entraînement extérieur au moyen d'une gaine (SR, 50) et un courant partiel, dérivé du courant principal de la pompe servant à la lubrification des paliers glissants (112, 212, 64, 65) de la pompe, éventuellement à l'évacuation des déperditions de chaleur du mécanisme d'entraînement ainsi que de la chaleur des paliers, passant à travers des canaux appropriés, à l'intérieur de la gaine et étant renvoyé dans le courant principal, l'extrémité de la gaine, proche de la pompe, possédant une bride de liaison (19, 219) s'éloignant de l'axe d'entraînement (53) du bloc (S, SpM,), présentant au moins un canal d'arrivée et une partie de la gaine, voisine de cette bride de liaison, recevant un fluide de refroidissement ou de chauffage indépendant du fluide mis en circulation, caractérisé en ce que dans le mécanisme d'entraînement à accouplement magnétique à gaine (M)' l'élément tournant (204) intérieur est séparé de l'élément d'entraînement (103) extérieur au moyen d'un bouchon de gaine (R, 207) à plusieurs parois débouchant au moins dans sa région axiale, dont le fond (228) est à double paroi au moins dans certaines parties, dont l'espace intérieur (233) compris entre les parois du fond du pot communique avec l'espace intérieur (210) compris entre les parois, présentant des cloisons de guidage d'écoulement (225, 226), de la partie axiale de la gaine, ou en ce que dans le mécanisme d'entraînement à moteur à gaine (SpM), l'élément tournant intérieur (54) est séparé de l'élément d'entraînement (55) extérieur par une gaine (50) axiale comportant au moins deux parois dont les parois de gaine (60, 61) sont reliées, à leur extrémité éloignée de la pompe, de manière étanche, avec une autre bride de liaison (19') éloignée de la pompe, un couvercle de fermeture (74) éloigné de la pompe, une bride d'étanchéité (46) ou un élément de fermeture similaire, un canal d'arrivée ou de départ (17, 217 ou 18, 218) au moins étant prévu dans une bride de liaison (19, 219), proche de la pompe, du pot formant gaine (207) ou dans une bride de liaison (19', 219), proche de la pompe, de la partie moteur d'une pompe à moteur à gaine (SpM), et dans une pompe à accouplement magnétique à gaine (S) un canal de départ ou d'arrivée (18, 218 ou 17, 217) étant prévu dans la bride de liaison côté pompe ou pour la pompe à moteur à gaine, dans la bride de liaison (19') éloignée de la pompe, pour recevoir et faire circuler un fluide de refroidissement ou de chauffage (214).

2. Bloc moteur-pompe selon la revendication 1, caractérisé en ce que l'écartement (d) des parois de la gaine (14, 21 ; 214, 221 ; 60, 61) est de 0,1 millimètre à 3 millimètres, de préférence compris entre 0,1 millimètre et 0,5 millimètre.

3. Bloc moteur-pompe selon la revendication 1 ou 2, caractérisé en ce que les cloisons de guidage d'écoulement (225, 226) s'étendent jusqu'à proximité de l'extrémité éloignée de la pompe de la gaine axiale et sont disposées de préférence axialement.

4. Bloc moteur-pompe selon l'une des revendications 1 à 3, caractérisé en ce qu'une paroi de gaine axiale au moins de sa gaine ou du pot formant gaine, de préférence la paroi extérieure (21, 221, 61), présente une épaisseur de paroi (Wa) adaptée aux conditions de pression pendant le fonctionnement de la pompe et en ce qu'éventuellement la paroi de gaine intérieure (14, 214, 60) voisine présente une épaisseur de paroi (Wi) nettement inférieure et est avantageusement extensible élastiquement, de manière à pouvoir s'appliquer contre la paroi extérieure de la gaine, lorsque celle-ci est endommagée, pour la soutenir.

5. Bloc moteur-pompe selon l'une des revendications 1 à 4, caractérisé en ce que la paroi de gaine intérieure et/ou la paroi de gaine extérieure (14, 21, 214, 221 ; 60, 61) de la gaine (7, 207, 9, 209, 50) peut être démontée séparément et présente de préférence dans ce cas, côté pompe, une bride d'étanchéité (30 ; 71, 88) radiale, dirigée vers l'extérieur et, à l'extrémité éloignée de la pompe, des organes d'étanchéité (40, 45, 72) ou une plaque de fond de pot (213) séparée.

6. Bloc moteur-pompe selon la revendication 5, caractérisé en ce qu'au moins une, de préférence les deux parois axiales de gaine (60, 61) de la gaine (50) d'une pompe a moteur à gaine (SpM'), se terminent sur le trou central (51) d'une bride d'étanchéité (46) et sont rendues étanches à cet endroit chacune à l'aide d'une bague d'étanchéité (44, 45), le canal de départ (218) pour le fluide de refroidissement ou de chauffage (214) se raccordant avantageusement à l'espace intérieur (62) compris entre les parois de la gaine, à cet endroit.

7. Bloc moteur-pompe selon la revendication 6, caractérisé en ce que la bride d'étanchéité (46), comportant avantageusement un canal de départ (218) relié à l'espace intérieur compris entre les parois (62), présente au moins un espace annulaire (48) pour loger une bague d'étanchéité (44) élastique pour l'étanchéité de la paroi extérieure (61) de la gaine, de préférence deux espaces annulaires (47, 48) pour loger deux organes d'étanchéité (44, 45) pour l'étanchéité de la paroi intérieure et de la paroi extérieure de gaine, ainsi qu' avantageusement une tubulure de centrage (93') pour la fixation concentrique, par rapport à l'axe de rotation (20) de la pompe à moteur à gaine (SpM'), sur le carter moteur (MG), de préférence sur la bride frontale (82).

8. Bloc moteur-pompe selon l'une des revendications 5 à 7, caractérisé en ce qu'un couvercle de fermeture (74) éloigné de la pompe et un palier de butée (73') éloigné de la pompe sont réalisés d'une seule pièce, servent, dans la région de l'extrémité éloignée de la pompe, de butée de centrage (96) pour l'extrémité éloignée de la pompe de la paroi intériéure de gaine (60') et la bride de raccord (74) éloignée de la pompe présente une tubulure de centrage (93') pour le maintien concentrique de la bague d'étanchéité (44), à l'intérieur d'un trou de centrage (94').

9. Bloc moteur-pompe selon l'une des revendications 1 à 8, caractérisé en ce que le fluide de refroidissement ou de chauffage, prévu dans l'espace intérieur (espaces intérieurs) des parois de la gaine ou du pot formant gaine, est envoyé vers un dispositif d'indication d'étanchéité de paroi, placé à l'extérieur de l'appareil, pour servir de fluide indicateur.

Fig. 1

EP 0 268 015 B1

Fig. 2

EP 0 268 015 B1

Fig. 8

Fig. 4

Fig. 3

EP 0 268 015 B1

Fig. 5

Fig. 6

EP 0 268 015 B1

Fig. 7

22

Fig. 9.

Fig. 10

Fig. 12

Fig. 13

Fig. 11

SpM

EP 0 268 015 B1

Fig. 14

Fig. 15

Fig. 19

Fig. 16

Fig. 17

Fig. 18

Fig. 20

Fig. 21

Fig. 22